# EUROPEAN PATENT APPLICATION

(11) **EP 0 533 437 A2**
(43) Date of publication of application: **24.03.1993**
(21) Application number: 92308390.1
(22) Date of filing: 15.09.1992
(51) Int. Cl.: B29C 45/14, B29C 51/02, B29C 49/06

(54) **Method for producing a multilayered thin wall container and a multilayered thin wall container**

(30) Priority: 19.09.1991 JP 268209/91; 19.09.1991 JP 268210/91; 19.09.1991 JP 268211/91; 19.09.1991 JP 268212/91; 19.09.1991 JP 268213/91; 11.11.1991 JP 322494/91; 11.11.1991 JP 322495/91; 12.11.1991 JP 323659/91; 12.11.1991 JP 323660/91; 12.11.1991 JP 323661/91; 13.03.1992 JP 89772/92; 28.04.1992 JP 136117/92; 07.05.1992 JP 142172/92
(71) Applicant: TOPPAN PRINTING CO. LTD., Tokyo 110 (JP)
(72) Inventor: Sawada, Kiyoshi, Toyonaka-shi, Osaka 560 (JP); Yamano, Yasuhiko, Nara-shi, Nara-ken 631 (JP); Kageyama, Koji, Suita-shi, Osaka 564 (JP); Wada, Kiyoshi, Yawata-shi, Kyoto 614 (JP); Murata, Yasutoshi, Minoo-shi, Osaka 562 (JP); Watada, Tetsuo, Itami-shi, Hyogo-ken 664 (JP); Toya, Takatoshi, Kitakatsushika-gun, Saitama-ken 340-02 (JP)
(74) Representative: Calderbank, Thomas Roger

(57) **Abstract**

A method for producing a multilayered thin wall container formed with resin materials having a plurality of resin layers, comprises a sheet installing step for arranging a sheet element piece containing a resin layer having a specific function, for example, a gas barrier property, at an injection space in a mold, an injection molding step for injecting a resin into the injection space in which the sheet element piece is arranged so as to form a preform in a state in which an injection resin layer is laminated on the surface of the sheet element piece, and a container shaping step for applying shaping processing such as vacuum forming, plug-assist forming or the like to the formed preform so as to form a product container. Also, a multilayered thin wall container which is produced by the method.

## Description

The present invention relates to a method for producing a multilayered thin wall container formed with resin materials having a plurality of resin layers, and to a multilayered thin wall container produced by the method.

With respect to a container for packaging food and the like, all or some of the following respective properties, those are mechanical strength, gas barrier property, moisture resistance, heat resistance, flavor keeping property and the like are required. These respective properties are known to be respectively achieved by specific resin materials. When there are optionally a plurality of desired properties, one container is formed by laminating individual resin materials which achieve these properties.

Various methods have been already proposed as the method for producing a container having such a multilayered structure as described hereinbelow.

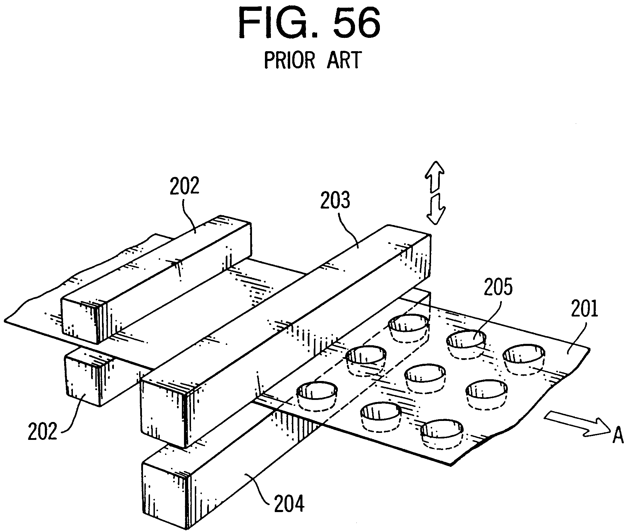

The first method is a so-called sheet forming method such as vacuum forming, air-pressure forming, plug-assist forming and the like. In this sheet forming method, as shown in Fig. 56, one band-shaped sheet 201 having a multilayered structure is conveyed in an arrow A by a predetermined sending pitch, simultaneously with which it is heated by a pair of upper and lower heaters 202, and then containers 205 are formed by using molds 203 and 204 arranged with opposing with each other.

In this sheet forming method, a large blank portion is provided between the individual containers 205 depending on the sending pitch of the sheet, and due to the structure of the molds 203 and 204, a large blank portion is formed between the individual containers 205 in a direction perpendicular to the sending direction A of the sheet. These blank portions become so-called scrap which does not contributes as products, which is extremely uneconomical.

It is also performed that such scrap is recovered to be recycled for a part of the layer constitution of the sheet 201 to regenerate the sheet 201, and the container 205 is shaped from the regenerated sheet. However, when the scrap is intended to be regenerated in this method, a part of the layer of the sheet 201 is constituted by a scrap layer or a scrap-mixed layer. In the sheet 201 in which such a resin is recycled, the composition of the scrap changes every time when the regeneration is performed, so that the characteristics of the sheet 201 as a whole change in accordance with the increase in the amount of scrap, and there is a fear of occurrence of dispersion in performances of each container to be formed. In addition, the resin for constituting the sheet 201 is gradually deteriorated due to grinding during the recycling, heat during the extrusion of the sheet and the like, sometimes resulting in occurrence of problems such as coloring, offensive odor, deterioration in strength and the like. It is extremely difficult to produce the sheet 201 to have a uniform thickness, and the thickness inevitably becomes uneven. A film is generally produced by the inflation method, extrusion method, co-extrusion method and the like, however, its thickness has more or less dispersion, and it is extremely difficult to make the thickness of a sheet obtained by laminating them into the multilayer to be uniform. When the thickness of the sheet 201 is uneven, with respect to the container 205 formed by the molds 203 and 204, the distribution of wall thickness becomes uneven in one container 205, and the wall thickness becomes uneven also among each of the containers 205. Further, the container is formed by heating and softening the sheet 201 in sheet forming process, however, when the heating temperature of a heater is ununiform in the width direction of the sheet 201, or when the cooling condition of the mold is ununiform for each cavity, the thickness becomes uneven in the container and among containers in the same manner. When there is such dispersion in the wall thickness, especially when the container is formed with a portion which has a wall thinner than a predetermined size, then the defective occurs such that sufficient mechanical strength of the container (for example, buckling strength) cannot be obtained, or the container deforms during heat sterilization after charging the contents.

As the second example of the production method of the container having the multilayered structure, there is a method disclosed in Japanese Examined Patent Publication No.57-1415. In this method, a rectangle-shaped multilayered sheet element piece is heated, and press molding is performed to produce a disk-shaped preform, and the disk-shaped preform is further subjected to shaping processing by vacuum forming or the like to produce a product container.

According to this method, the scrap can be considerably reduced in a quantity as compared with the above-mentioned sheet forming. However, when the multilayered sheet element piece is subjected to the press molding to make the preform, it is necessary to heat the sheet element piece to a high temperature to decrease its viscosity. Such operation makes the layer constitution of the multilayered sheet element piece to be easily destroyed. Namely, the layer is apt to be partially thin, or be cut. With respect to a product container formed from the multilayered sheet element piece having the destroyed layer constitution, no specific function aiming at the gas barrier property and the like can be obtained.

Unless a resin having a good fluidizing property is used as the resin which contacts with the mold for molding the preform, no good preform can be obtained. Namely, the resin which can be used as the multilayered sheet element piece is limited to a narrow range.

As the production method of a container in which the preform is utilized, there is so-called the injection blow method disclosed in each of official gazettes of Japanese Patent Application Laid-open Nos.60-178020, 60-244518, 63-130330 and 63-296921. In this injection blow method, a disk-shaped preform is molded by injection molding, and shaping processing such as the plug-assist forming or the like is applied to the preform, thereby a product container is produced.

In this injection blow method, the injection molding method that is the molding method by injection is used in the step of shaping molding of the preform, so that it is extremely difficult to make the preform into a multilayered structure, and usually a preform of single layer is made only. Therefore, there has been such a problem in that a container having a specific function such as the gas barrier property or the like cannot be produced.

With respect to the forming of the preform utilizing the injection molding, by using a plurality of injection apparatus and multilayer molding injection nozzles as disclosed in Japanese Patent Application Laid-open No.3-176126, a preform having a multilayered structure may be produced. In this case, the layer constitution is in a symmetrical form, and studies are being proceeded directing to the practical use, for example, as cup-shaped containers and bottles having a resin of the gas barrier property as an intermediate layer. However, in the case of using this technology, it is not only extremely difficult to make the layer thickness of each resin layer to be uniform, but in the vicinity of the cavity end at which the fluidized resin finally arrives, the multilayered structure itself is not realized in many cases. Therefore, it is impossible to give a uniform multilayered structure over the whole preform. Further, when it is necessary to laminate a large number of resins into the layer constitution of the asymmetrical form as in the present invention, this method cannot be applied.

As another method for producing the container having the multilayered structure, there is a method disclosed in each of official gazettes of Japanese Patent Application Laid-open No. 2-45352 and Japanese Utility Model Application Laid-open No. 2-80519. In this method, a cup-shaped container is pre-molded by sheet forming, and an outer layer is formed on its outer periphery by injection molding to produce a container. It is technically possible to set a molding article having a solid body shape in an injection mold, however, there are such problems in that it is very troublesome, the treating speed becomes slow, and the cost becomes high. Since a resin is poured into a injection gap in the mold during the injection molding, unless the gap has a thickness not less than a predetermined constant amount, sufficient molding cannot be performed. Therefore, in the above-mentioned conventional method, there has been such a problem in that the thickness of a container wall of the finished container becomes too thick.

It is an object of the present invention to make it possible to economically produce a container having a multilayered structure and a thin wall without destroying its layer constitution and with reducing the occurrence of scrap as less as possible.

In order to achieve the above object, the multilayered thin wall container according to the present invention is formed by applying shaping processing to a sheet of a preform having a plurality of resin layers, and the preform is formed by overlapping an injection resin layer onto the surface of a sheet element piece containing a resin layer having a specific function by injection molding.

The method for producing a multilayered thin wall container according to the present invention comprises a sheet installing step for installing a sheet element piece containing a resin layer having a specific function to the inside of a mold, an injection molding step for injecting a resin into the mold in which the sheet element piece is installed so as to form a preform, and a container shaping step for applying shaping processing such as vacuum forming, air-pressure forming or the like to the formed preform so as to form a product container.

Upon the production of the multilayered thin wall container, at first, one sheet raw material containing one or more resin layers is prepared, and a sheet element piece having a predetermined shape, for example, a disk shape is produced by punching or the like, and the sheet element piece is installed to the inner surface of a mold of injection molding. Then, a resin such as polypropylene (PP) or the like is laminated on the surface of the sheet element piece by injection molding to make the preform. And then, shaping processing such as vacuum forming, air-pressure forming or the like is applied to the preform to produce the product container.

Since press forming is not used but the injection molding is used during the production of the preform, the layer structure of the sheet element piece, that is the layer structure of the preform is never destroyed. Therefore, the specific function such as the gas barrier property and the like can be certainly obtained.

The preform is formed by the combination of the sheet element piece having been formed beforehand and the injection molding, so that even when the sheet element piece has more or less dispersion, the dispersion is offset by the injection molding step, and the thickness as the whole preform can be made uniform with extremely good accuracy. Since the shaping processing is applied to the preform having the uniform thickness to form the product container, the wall thickness of the obtained product container is also uniform. Also in that case, the layer structure in the container wall is not destroyed.

The preform is prepared one by one, each of which is shaped into the product container, so that a large amount of scrap is not generated as compared to the conventional sheet forming method (Fig. 56), and hence, it is extremely economical. In this case, the sheet element piece itself to be installed to the mold is prepared as a large number of individuals, for example, by punching or cutting one large sheet material. The punching of the sheet material can be performed in an extremely high density, so that a large amount of scrap is never generated, and during the lamination of the resin layer by the injection molding, the scrap is scarcely generated, so that the generation of scrap during the production of the preform becomes extremely less.

The preform is formed by performing the injection molding under the condition of installing the sheet element piece in the mold, so that even if the injection molding is utilized, the preform of the multilayered structure having stable quality can be obtained.

In the above-mentioned explanation, the resin layer having the specific function means a resin layer which has each of the functions of the gas barrier property, moisture resistance, heat resistance, flavor keeping property (namely, non-absorbing property), heat insulating property, design property and the like. An adhesive layer which works as an adhesive when resins having bad adhesive properties are laminated with each other by providing between each of layers thereof is also considered to be the resin layer having the specific function. The design property is a nature for increasing the good appearance when a container is observed from the outside. As the resin layer for achieving each of these functions, the following resin layers can be applied respectively.
Gas barrier property:
saponified ethylene-vinyl acetate copolymer (EVOH),
polyvinylidene chloride (PVDC), polyvinyl alcohol (PVA) Moisture resistance:
polyamide(nylon), polypropylene (PP), polyolefin kneaded with desiccant
Heat resistance:
polyester (PET), polycarbonate (PC), PP
Flavor keeping property (namely,non-absorbing property):
PET, EVOH, polyacrylonitrile (PAN)
Adhesive layer:
ionomer,ethylene-vinyl acetate copolymer (EVA)
Heat insulating property:
foamed polyolefin, foamed polystyrene
Design property:
print film

Incidentally, PET generally depicts polyethylene terephthalate. However, other polyester type resins such as polybutylene terephthalate (PBT), copolymerized polyester and the like can be used as the above-mentioned polyester other than the polyethylene terephthalate.

Vacuum forming, air-pressure forming, plug-assist forming and the like may be considered as the shaping processing for shaping the preform into the product container.

The vacuum forming is a forming method in which the interior of the mold space is made vacuum and the sheet material is deformed to closely contact with the mold to be formed. The air-pressure forming is a forming method in which the sheet material is pressurized by air to allow it to closely contact with the mold to be formed. The plug-assist forming is a forming method in which in the above-mentioned vacuum forming or air-pressure forming, the sheet material is pressurized by the plug in an auxiliary manner to form the sheet material.

The resin layer which is laminated on the surface of the sheet element piece by the injection molding is mainly to make the container to have mechanical strength, for which, for example, polypropylene (PP), polystyrene, polyester, polyvinyl chloride (PVC)and the like are used.

### In the drawings:

Fig. 1 is a plan view showing one example of a container production apparatus for producing a product container.

Fig. 2 is a side cross-sectional view showing an injection molding apparatus in accordance with the arrow II in Fig. 1.

Fig. 3 is a side cross-sectional view showing a state in which the injection molding apparatus in Fig. 2 moves to a clamping position.

Fig. 4 is a side cross-sectional view showing a preform heating apparatus in accordance with the arrow IV in Fig. 1.

Fig. 5 is a side cross-sectional view showing a state in which the preform heating apparatus in Fig. 4 moves to a clamping position.

Fig. 6 is a side cross-sectional view showing a plug-assist forming apparatus in accordance with the arrow VI in Fig. 1.

Fig. 7 is a side cross-sectional view showing a state in which the plug-assist forming apparatus in Fig. 6 moves to a clamping position.

Fig. 8 is a figure showing by enlarging an important part in Fig. 3.

Fig. 9 is a figure showing by enlarging an important part in Fig. 5.

Fig. 10 is a figure showing by enlarging an important part in Fig. 2.

Fig. 11 is a figure showing by enlarging an important part in Fig. 7.

Fig. 12 is a perspective view showing a container for winding fastening as one example of the multilayered thin wall container.

Fig. 13 is a perspective view showing a container for heat seal as another example of the multilayered thin wall container.

Fig. 14 is a perspective view showing one example of a sheet element piece.

Fig. 15 is a cross-sectional view showing one example of a preform.

Fig. 16 is a perspective view showing a container with a heat seal cap as another example of the multilayered thin wall container.

Fig. 17 is a side cross-sectional view of a container for heat seal.

Fig. 18 is a cross-sectional view showing another example of a preform.

Fig. 19 is a cross-sectional view showing still another example of a preform.

Fig. 20 is a side cross-sectional view showing a welding apparatus for welding a heat seal cap to a product container.

Fig. 21 is a side cross-sectional view showing another example of an injection molding apparatus.

Fig. 22 is a side cross-sectional view showing another example of a plug-assist forming apparatus as a container shaping apparatus.

Fig. 23 is a cross-sectional view showing another example of a preform.

Fig. 24 is a side cross-sectional view showing another example of a plug-assist forming apparatus.

Fig. 25 is a side cross-sectional view showing another example of an injection molding apparatus.

Fig. 26 is a side cross-sectional view showing another example of a plug-assist forming apparatus.

Fig. 27 is a side cross-sectional view showing another example of a preform heating apparatus.

Fig. 28 is a cross-sectional view showing another example of a preform.

Fig. 29 is a side cross-sectional view showing another example of a product container.

Fig. 30 is a perspective view showing one example of a cap made of metal for winding fastening.

Fig. 31 is a cross-sectional view showing a winding fastening state of a product container and a cap made of metal.

Fig. 32 is a partially broken perspective view showing another example of a preform.

Fig. 33 is a side cross-sectional view showing another example of a product container.

Fig. 34 is a side cross-sectional view showing another example of an injection molding apparatus.

Fig. 35 is a side cross-sectional view showing another example of a preform heating apparatus.

Fig. 36 is a side cross-sectional view showing another example of an injection molding apparatus.

Fig. 37 is a side cross-sectional view showing a case in which the injection molding apparatus in Fig. 36 is in a clamping state.

Fig. 38 is a side cross-sectional view showing still another example of an injection molding apparatus.

Fig. 39 is a side cross-sectional view showing still another example of an injection molding apparatus.

Fig. 40 is a side cross-sectional view showing a case in which the injection molding apparatus in Fig. 39 is in a state of pinching a sheet raw material under pressure.

Fig. 41 is a side cross-sectional view showing a case in which the injection molding apparatus in Fig. 39 is in a clamping state.

Fig. 42 is a partial cross-sectional view showing an example in which the injection molding apparatus in Fig. 39 is improved.

Fig. 43 is a partially broken perspective view showing another example of a preform.

Fig. 44 is a side cross-sectional view showing another example of an injection molding apparatus.

Fig. 45 is a plan view showing a case in which an injection space formed in the injection molding apparatus in Fig. 44 is viewed from an upper position.

Fig. 46 is a side cross-sectional view showing an example of a injection molding apparatus improved from the apparatus shown in Fig.44.

Fig. 47 is a partially broken perspective view showing another example of a preform.

Fig. 48 is a side cross-sectional view showing another example of an injection molding apparatus.

Fig. 49 is a partially broken perspective view showing another example of a preform.

Fig. 50 is a partially broken perspective view showing still another example of a preform.

Fig. 51 is a side cross-sectional view showing another example of an injection molding apparatus.

Fig. 52 is a side cross-sectional view showing another example of a preform.

Fig. 53 is a side cross-sectional view showing another example of a plug-assist forming apparatus.

Fig. 54 is a side cross-sectional view showing one example of an internal structure of an important part of an injection molding apparatus.

Fig. 55 is a side cross-sectional view showing a preform produced by the injection molding apparatus shown in Fig. 54.

Fig. 56 is a perspective view showing one example of a conventional container production apparatus.

### Example 1

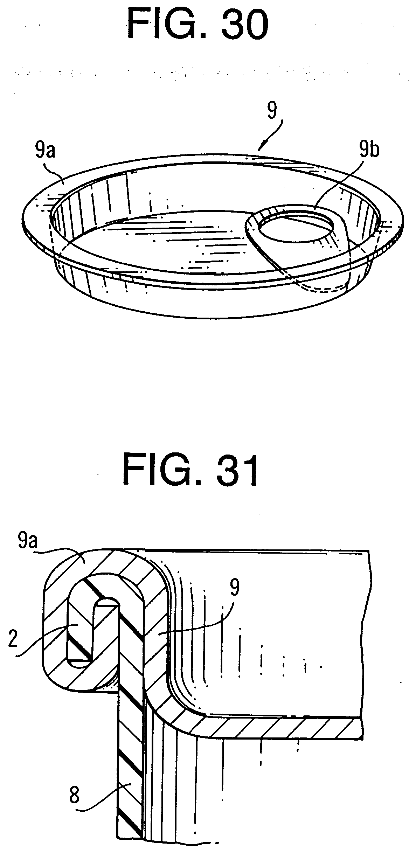

The first example of the container production method according to the present invention, which will be explained hereinbelow, is used for producing a multilayered thin wall container as shown in Fig. 12, that is a cup container 1 for winding fastening. This container 1 has a flange 2 for winding fastening at the upper end of a container wall 8. With this flange 2, a flange 9a of a metal cap 9 for tight sealing as shown in Fig. 30 is connected by winding fastening, and thereby the interior of the container is tightly sealed. In Fig. 30, the reference numeral 9b depicts a handle which is used when the cap 9 is opened. As shown in Fig. 31, the winding fastening is performed by inwardly winding the flange 9a of the metal cap 9 into the container flange 2.

It is known that upon such winding fastening, unless the thickness of the container flange is in a predetermined thin thickness, no sufficient tight sealing state can be obtained. A preferable thickness of the flange is 0.4 to 0.6 mm, more preferably 0.4 to 0.5 mm. When a container with a flange produced by a conventional sheet forming method is tightly sealed by winding fastening, the flange is too thick in many cases, so that secondary processing such as heat press of the flange portion, shaving down the flange portion or the like is performed to give a predetermined thickness.

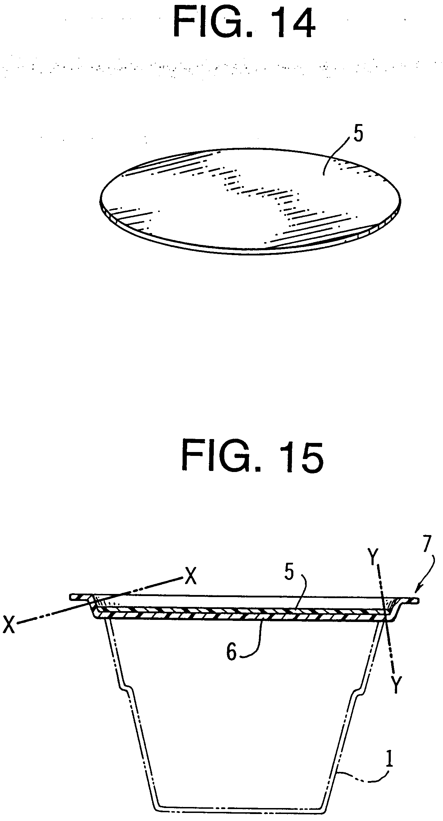

The container 1 is produced by applying shaping processing such as plug-assist forming or the like to a preform 7 as shown by the solid line in Fig. 15. In this preform 7, an injection resin layer 6 is formed to be larger than a sheet element piece 5, thereby the outer edge portion of the injection resin layer 6 can be formed as a flange having a predetermined thickness. On the contrary, the sheet element piece 5 may be made to have a preferable thickness for a flange beforehand, and a size of the sheet element piece 5 may be made larger than the injection resin layer 6 in a contrary manner as Fig. 15, thereby the outer edge portion of the sheet element piece 5 may be used as a flange having a predetermined thickness. Further, it is also available that the size of the sheet element piece 5 is the same as that of the injection resin layer 6, and in order that the injection resin layer 6 at the outer edge portion of the preform 7 is made thinner than other portions, a mold is designed or the like, thereby a total thickness of the sheet element piece 5 and the injection resin layer 6 becomes a predetermined thickness. As described above, the present invention uses the preform comprising the combination of the sheet element piece 5 produced beforehand and the injection resin layer 6 laminated on the surface thereof by injection molding, so that it can be extremely easily performed to control a specific portion to have a desired thickness.

The container 1 shown in Fig. 12 is produced by the container production step comprising following each of steps, those are a sheet element piece preparing step for preparing a disk-shaped sheet element piece 5 having a single-layer or multilayered structure as shown in Fig. 14, an injection molding step for laminating a single-layer injection resin layer 6 on one of surfaces of the disk-shaped sheet element piece 5, for example, on the lower surface as shown in Fig. 15 by injection molding to form the preform 7, and a container shaping step for applying shaping processing, for example, vacuum forming, air-pressure forming to the formed preform 7 to form a cup-shaped container 1 as a product container as shown by the chain line. In the above container production process, a preform heating step for preliminarily heating the formed preform 7 can also be optionally added between the injection molding step and the container shaping step.

The sheet element piece 5 shown in Fig. 14 is formed into a specific single-layer structure or a multilayered structure in order to obtain an aimed specific function such as for example the gas barrier property, moisture resistance, heat resistance, flavor keeping property (namely, non-absorbing property) or the like. For example, there are considered as the two-layer structure from the direction corresponding to the inside of the container:
PET/EVOH, PET/PVDC and the like
as the structure of three layers or more:
PET(30µm)/EVOH(100µm)/CPP(30µm)
PET(30µm)/PVDC(25µm)/CPP(30µm)
PET/EVOH/scrap recovered resin/PP and the like
In addition, between each of the layers of the above-mentioned sheet element piece 5, optionally an adhesive or an adhesive resin is present. Each of the above-mentioned layers may be formed from a stretched film.

The method for producing the sheet element piece 5 is not limited to a special method, and optional methods can be used. For example, one large sheet having an aimed layer constitution is made by an optional sheet production method such as for example the adhesive laminating method, co-extrusion method, heat laminate method, and a large number of disk-shaped sheet element pieces 5 can be produced from the one sheet by punching processing. In the punching processing, the individual disk-shaped sheet element pieces 5 can be punched in a high density, namely from positions fairly adjoining with each other, so that there is no fear that a large amount of scrap remains in the raw material sheet after the punching processing.

As the injection resin layer which is laminated on the sheet element piece 5 in the injection molding step, a thermoplastic resin which has a mechanical strength capable of giving a desired shape to the container such as for example PP, PS, PVC, PC may be used. And if necessary, the injection resin layer 6 can also be formed into a multilayered structure by means of multilayered injection molding, and in such a case, the residue of the punched sheet or the defective molded articles are recovered to be included as a part of the injection resin layer as a scrap recovered layer, thereby economical advantages can be obtained. A resin layer having a specific function can also be included in the injection resin layer 6.

The shaping processing applied to the preform is a processing method in which the preform is extended to be shaped and processed into a desired shape, for example, a cup shape. For example, the vacuum forming, air-pressure forming, plug-assist forming can be adopted.

The preform heating step inserted between the injection molding step and the container shaping step is a step for preliminarily heating the preform 7 before being subjected to shaping. This step is performed in order to certainly weld the disk-shaped sheet element piece 5 to the injection resin layer 6 laminated thereon so as to raise temperature to a temperature at which the preform 7 can be easily shaped and processed. When the container shaping step is immediately conducted after the production of the preform by the injection molding, there may be such a case in which the preform heating step is not provided. This is due to the fact that the sheet element piece 5 is heated by the injected resin having high temperature.

When a period of time from the injection molding to the container shaping is relatively short, only the sheet element piece 5 of the preform 7 may be heated. On the other hand, when the period of time from the injection molding to the container shaping is long and the preform 7 is completely cooled, both of the sheet element piece 5 and the injection resin layer 6 are heated.

The method for producing the multilayered thin wall container 1 (Fig. 12) will now be explained in detail referring to a example of a container production apparatus.

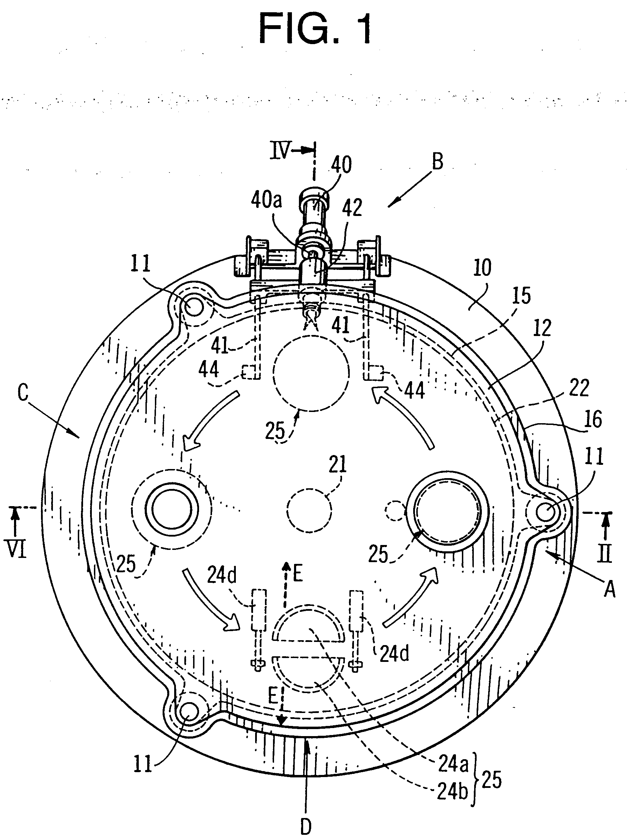

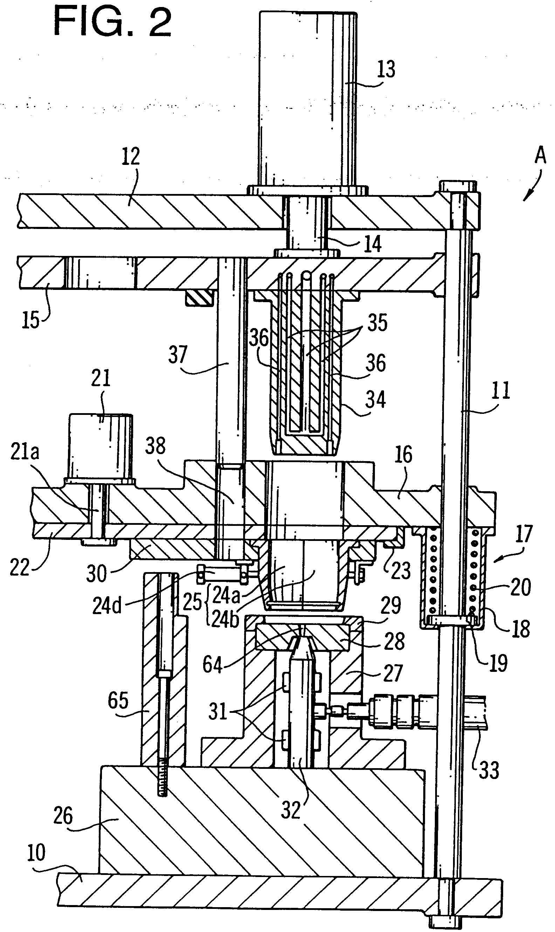

Fig. 1 is a plan view showing the whole of one example of a container production apparatus. Fig. 2 is a cross-sectional view in accordance with the arrow II in Fig. 1. As shown in these figures, the present container production apparatus has a disk-shaped base 10, three tie rods 11 which are fixed to the base 10 and extend upwardly, and a disk-shaped top plate 12 which is fixed to the upper ends of these tie rods 11. A hydraulic pressing device 13 is fixed and installed at the right side portion on the upper surface of the top plate 12. The hydraulic pressing device 13 reciprocally drives an output rod 14 in the upper and lower directions. A clamping plate 15 is fixed at the lower end of the output rod 14. The clamping plate 15 is loosely fitted to the tie rods 11, which can perform parallel movement in the upper and lower directions by being guided by these tie rods 11.

In Fig. 2, a disk-shaped movable plate 16 is provided at a downward position of the clamping plate 15. The movable plate 16 is loosely fitted to the tie rods 11, which can also perform parallel movement in the upper and lower directions by being guided by these tie rods 11. The movable plate 16 is supported at an intermediate position with respect to the tie rods 11 by means of supporting apparatuses 17 provided corresponding to each of the three tie rods 11. The supporting apparatus 17 is constituted by a cylindrical housing 18, a flange 19 formed at the outer peripheral surface of the tie rod 11, and a compression spring 20 arranged between the flange 19 and the movable plate 16. The movable plate 16 is supported by the biasing force of the spring 20.

At the central position of the movable plate 16, a driving device for rotation, for example, an electric motor 21 is fixed and installed. An output shaft 21a of the electric motor 21 penetrates through the movable plate 16 and is fixed to a transfer plate 22 provided beneath the movable plate 16. The outer peripheral side surface of the transfer plate 22 is supported by a ring-shaped supporting member 23 having an L-shaped cross-section fixed to the bottom surface of the movable plate 16.

At the bottom surface of the transfer plate 22 is provided a mold 25 for holding a preform comprising two splittable molds 24a and 24b which joint with each other in a state of being held by a holding member 30. Air cylinders 24d are attached between the splittable molds 24a and 24b. Owing to the operation of the air cylinders 24d, the splittable molds 24a and 24b can move between a position shown in the figure in which they joint with each other and a separation position in which they are separated with each other in the radial direction, namely left and right directions in Fig. 2.

As shown in Fig. 1, the molds 25 for holding a preform are provided at four places with leaving angle intervals of 90°. These four molds 25 for holding a preform are driven by the motor 21 and intermittently rotate counterclockwise with an angle interval of 90°. The four positions at which these molds 25 for holding a preform stop during the intermittent rotation are set as an injection molding stage A, a preform heating stage B, a container shaping stage C, and a container recovering stage D, respectively.

### Injection molding stage

Fig. 2 shows the injection molding stage A in which a cavity base 27 having a generally cylindrical shape is fixed and installed on a block 26 mounted on the base 10, and an injection cavity 28 is fixed to the upper end of the cavity base 27. A reference numeral 29 depicts a ring-shaped cavity holder. At the inside of the cavity base 27, a hot runner 32 which is heated by a band-shaped heater 31 is accommodated. The forward end of the hot runner 32 contacts with the lower end of a gate 64 of the injection cavity 28. The hot runner 32 is connected with the forward end of a nozzle of an injection molding machine 33, and an injection resin sent from the injection molding machine 33 is supplied to the gate 64 through the hot runner 32.

At an upper position opposing to the injection cavity 28 with interposing the movable plate 16 is provided a column-shaped injection core 34 which is fixed to the bottom surface of the clamping plate 15. At the inside of the core 34 are provided a cooling liquid passage 35 and an air suction passage 36. Cooling water is allowed to flow in the cooling liquid passage 35 from a water supply source (not shown). The air suction passage 36 is connected with a vacuum pump (not shown), and owing to the work of this pump, air is drawn from the lower end of the core 34 through the air suction passage 36.

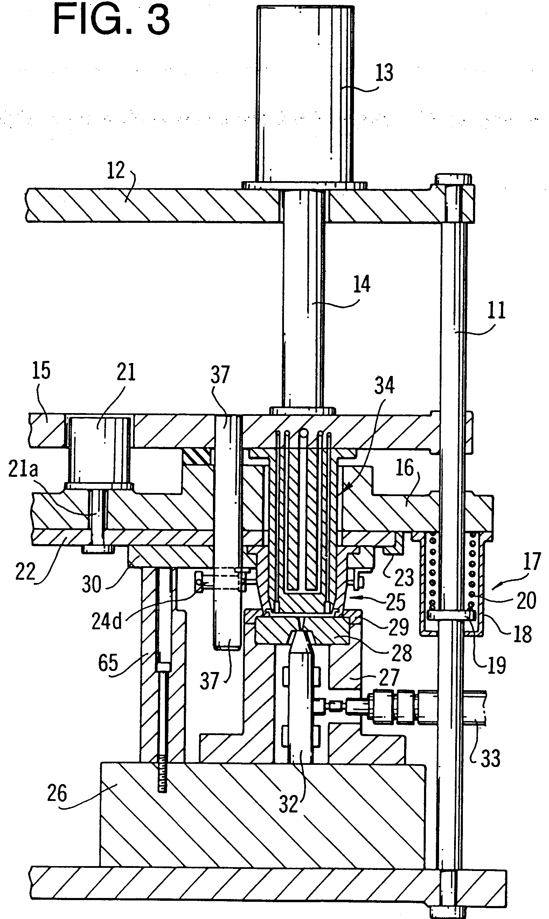

The injection core 34 is constituted to perform reciprocal and straight movement in the upper and lower directions together with the clamping plate 15, which moves between a releasing position shown in the figure and a clamping position shown in Fig. 3. The releasing position is a position at which the core 34 is largely separated from the cavity 28. The clamping position is a position at which the core 34 and the cavity 28 joint with each other and an injection space G corresponding to a desired preform shape is formed between the both.

A column-shaped guide rod 37 is provided at the left side of the injection core 34. The guide rod 37 is fixed to the clamping plate 15 at its upper end, which is fitted to a through-hole 38 provided in the movable plate 16, the transfer plate 22 and the holding member 30 at its lower end with leaving a little clearance.

### Preform heating stage

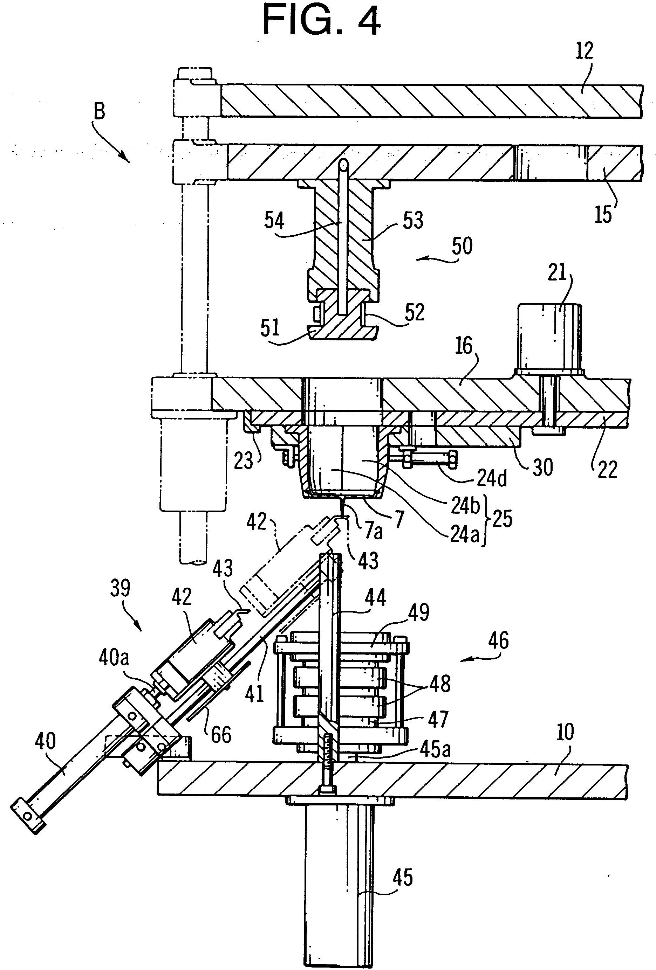

Fig. 4 shows the preform heating stage B in accordance with the arrow IV in Fig. 1. In this stage B, a sprue cutting apparatus 39 is provided at the left end portion of the base 10. The sprue cutting apparatus 39 has an pneumatic pressing device 40 which is fixed to the base 10, two guide rods 41 which extend obliquely upwardly from the pneumatic pressing device 40, and an pneumatic nipper 42 which is fixed to the forward end of an output rod 40a of the air press apparatus 40 and performs upward and downward movement by being guided by the guide rods 41. At the forward end of the pneumatic nipper 42 is provided a nipper 43 which is pneumatically driven and performs opening and closing operation. A reference numeral 44 is a support column for supporting the guide rods 41.

At the bottom surface of the base 10 at a position of entrance toward the center from the pneumatic pressing device 40 is fixed and installed an elevating device 45 which is hydraulically or pneumatically driven. And to the upper end of an output rod 45a of the elevating device 45 is fixed a lower heater unit 46. The lower heater unit 46 is constituted by a generally cylindrical heating pot 47, a band-shaped heater 48 which is wound around the outer peripheral side surface of the heating pot 47, and a clamp head 49. The lower heater unit 46 can be omitted when transfer to the shaping step of the container is conducted immediately after laminating the injection resin layer 6 on the sheet element piece 5.

At an upward position opposing to the lower heater unit 46 with interposing the movable plate 16 is provided an upper heater unit 50 which is fixed to the bottom surface of the clamping plate 15 with hanging vertically. The upper heater unit 50 has a generally column-shaped main body 53 which is fixed to the bottom surface of the clamping plate 15, a heating core 51 which is fixed to the main body 53 by means of bolts or the like (not shown), a band-shaped heater 52 which is wound around the outer peripheral side surface of the heating core 51, and a rod-shaped heater 54 which extends through the main body 53 to the heating core 51.

### Plug-assist forming stage

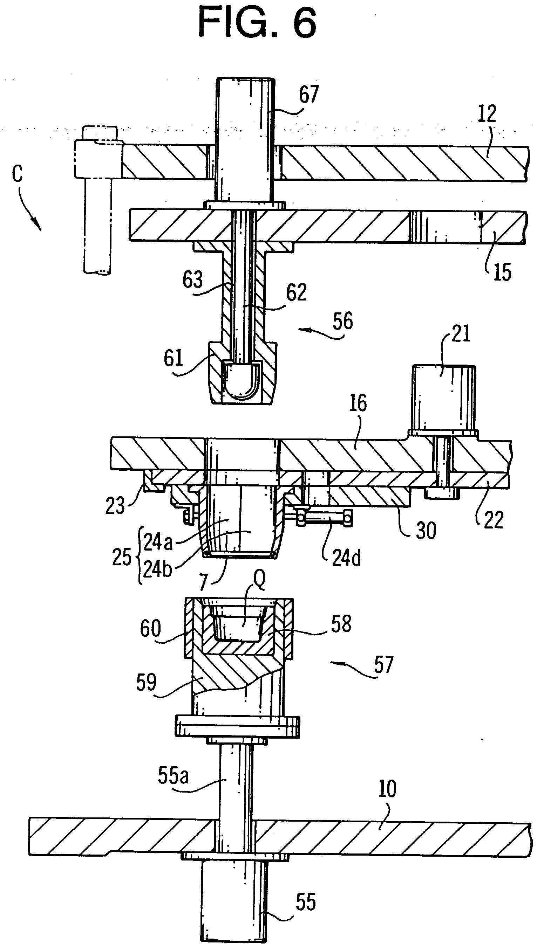

Fig. 6 shows the container shaping stage C in accordance with the arrow VI in Fig. 1. A plug-assist forming apparatus constituted by an upper mold unit 56 and a lower mold unit 57 is located in the container shaping stage C. The lower mold unit 57 is fixed to the upper end of an output rod 55a of an elevating device 55 which is fixed and installed at the bottom surface of the base 10 and is hydraurically or pneumaticaly driven. The lower mold unit 57 has a container lower mold 58 which is provided with a concave portion Q corresponding to the shape of the product container 1(Fig. 12), a lower mold holder 59 which accommodates the container lower mold 58, and a cooling cylinder 60 for cooling the container lower mold 58.

The upper mold unit 56 provided with opposing to the lower mold unit 57 with interposing the movable plate 16 has a generally cylindrical upper mold core 61, a plug 62 which penetrates through the upper mold core 61 and extends in the upper and lower directions, and an air introducing hole 63 which is formed around the plug 62. The air introducing hole 63 is connected with an air supply source (not shown), and the air sent from the air supply source is ejected from the lower end of the upper mold core 61 toward the downward direction through the air introducing hole 63.

### Container recovering stage

In the container recovering stage D shown in Fig.1, a mechanism is installed for changing the operation direction of pneumatic cylinders 24d to separate the splittable molds 24a and 24b which constitute the mold 25 for holding a preform with each other. As a structure for this separating mechanism, an optional structure can be adopted.

The operation of the container production apparatus consisting of the above-mentioned constitution will be explained hereinafter.

### Injection molding step

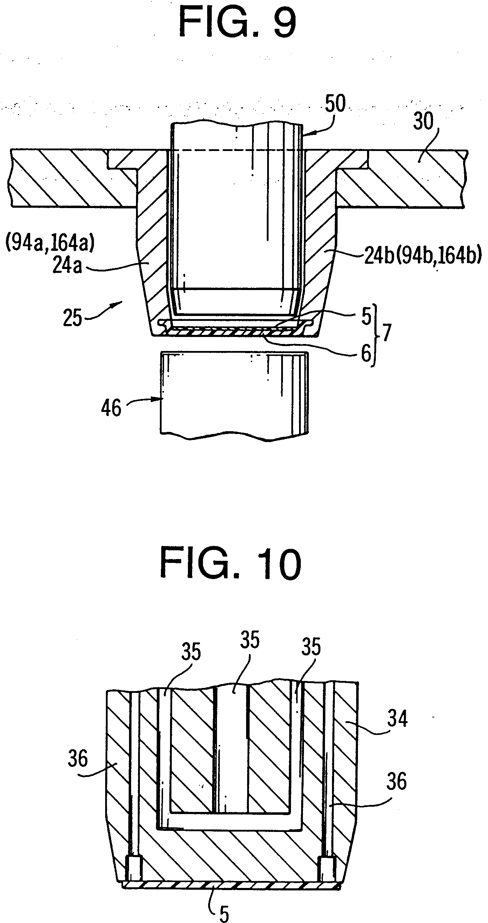

As shown in Fig. 2, the clamping plate 15 is lifted to the uppermost position by means of the hydraulic pressing device 13, and the injection core 34 and the mold 25 for holding a preform are moved to a releasing position in which they are largely separated from the injection cavity 28 together. This allows the upper surface of the cavity 28 to be largely released. Under this condition, the disk-shaped sheet element piece 5 (see Fig. 14) is installed to the lower end of the core 34, as shown in Fig.10. The sheet element piece 5 is absorbed and fixed to the lower end of the core 34 by means of air flowing in the air suction passage 36. The installed sheet element piece 5 has its upper surface that is a surface contacting with the core 34 as the inner peripheral surface of the container.

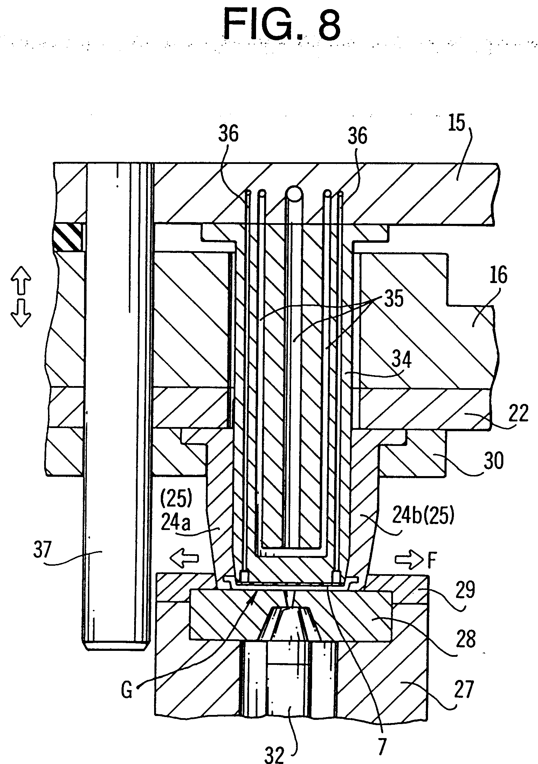

When the sheet element piece 5 is installed to the lower end of the core 34, as shown in Fig. 3, the hydraulic pressing device 13 is operated to pressurize the clamping plate 15 downwardly. The pressurized clamping plate 15 pushes the movable plate 16 downwardly by its bottom surface. The movable plate 16 thus pushed downwardly stops at a place where the holding member 30 abuts against the upper end of a stopper 65. In this stopping state, as shown in Fig. 8, the core 34 and the mold 25 for holding a preform are set to the clamping position in which by means of the core 34, the mold 25 for holding a preform, and the cavity 28, the injection space G which coincides with the shape of the preform (Fig. 15) is formed. Then, a resin is poured into the injection space G through the hot runner 32. Thus, the injection resin layer 6 (Fig. 15) is laminated on the lower surface of the sheet element piece 5, and thereby the preform 7 is formed as shown by the solid line in Fig. 15. When the preform 7 is formed, the hydraulic pressing device 13 performs reciprocal movement to lift the clamping plate 15 upwardly as shown in Fig. 2, and the movable plate 16 is lifted upwardly by the biasing force of the spring 20 in the supporting apparatus 17 of the movable plate 16. This allows the upper portion of the cavity 28 to be released. When the upper portion of the cavity 28 is released as described above, the motor 21 is operated to allow the transfer plate 22 to rotate counterclockwise in Fig. 1 by 90°. Owing to this rotation, the mold 25 for holding which holds the produced preform 7 is carried to the next stage, namely the preform heating stage B.

### Preform heating step

When the injection molding is completed, the preform 7 is then transferred to the preform heating stage B with being held by the mold 25 for holding comprising the splittable molds 24a and 24b. As shown in Fig. 4, when the mold 25 for holding which holds the preform 7 is set to a predetermined position in the heating stage B, the clamping plate 15 descends to lower the upper heater unit 50, and thereby the movable plate 16 is pushed to descend to lower the mold 25 for holding. And then, the pneumatic pressing device 40 in the sprue cutting apparatus 39 is operated to lift the pneumatid nipper 42 to the upper position shown by the chain line. The pneumatic nipper 42 having been lifted to the upper position cuts a sprue portion 7a vertically hanging downwardly from the central portion of the preform 7 from its root portion by means of the nipper 43 arranged at its forward end. The sprue portion 7a thus cut is discharged downwardly through a guide plate 66.

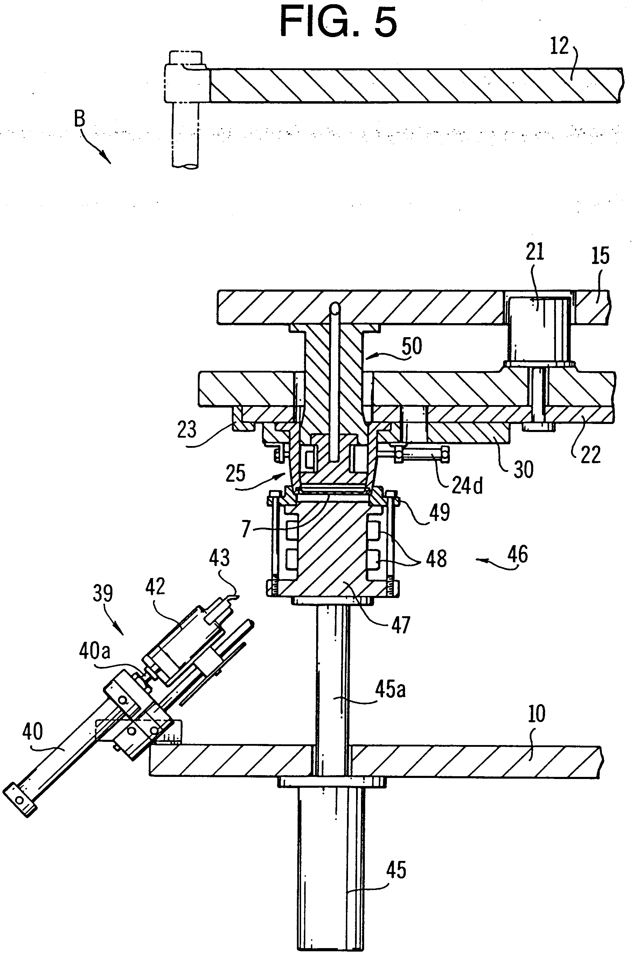

When the cutting treatment for the sprue portion 7a is completed, the pneumatic nipper 42 is drawn and returned to the lower position (solid line). Subsequently, the elevating device 45 is operated, as shown in Fig.5, to lift the lower heater unit 46 upwardly, which is fitted to the lower end outer periphery of the mold 25 for holding a preform. According to the above-mentioned operation, as shown in Fig. 9, the upper heater unit 50 is conveyed to the position just above the preform 7, and the lower heater unit 46 is conveyed to the downward position of the preform 7. Due to the heat emitted from the upper heater unit 50 and the lower heater unit 46, the preform 7 is heated. This heating operation facilitates the welding between the sheet element piece 5 and the injection resin layer 6 and performs a preliminary heating for the next step, namely the container shaping step. This heating step may be eliminated depending on cases.

When the heating treatment is completed, as shown in Fig. 4, the clamping plate 15 is lifted upwardly to lift the upper heater unit 50 upwardly, and the elevating device 45 performs reciprocal movement to lower the lower heater unit 46 downwardly. This allows the circumference of the mold 25 for holding which holds the preform 7 to be largely released. Under this released state, the motor 21 is operated to rotate the transfer plate 22 counterclockwise by 90° in Fig. 1 so as to convey the preform 7 up to the container shaping stage C.

### Container shaping step

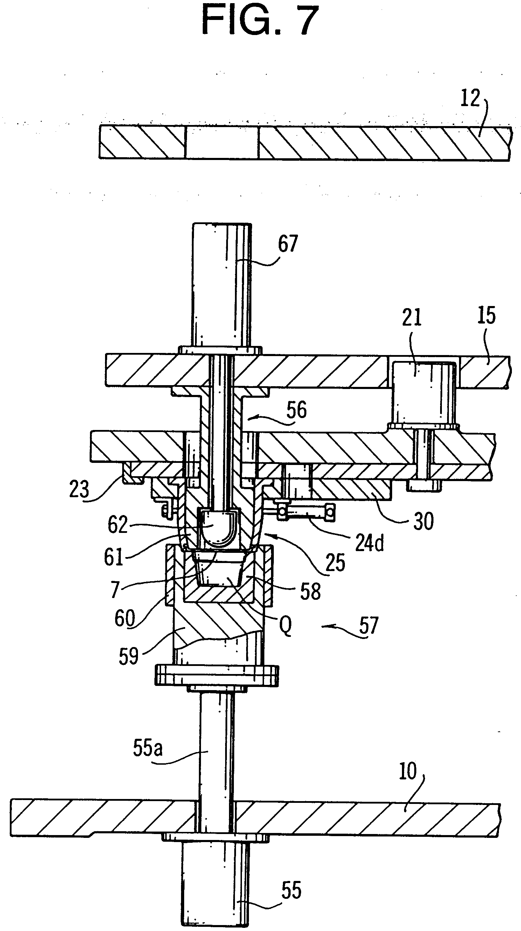

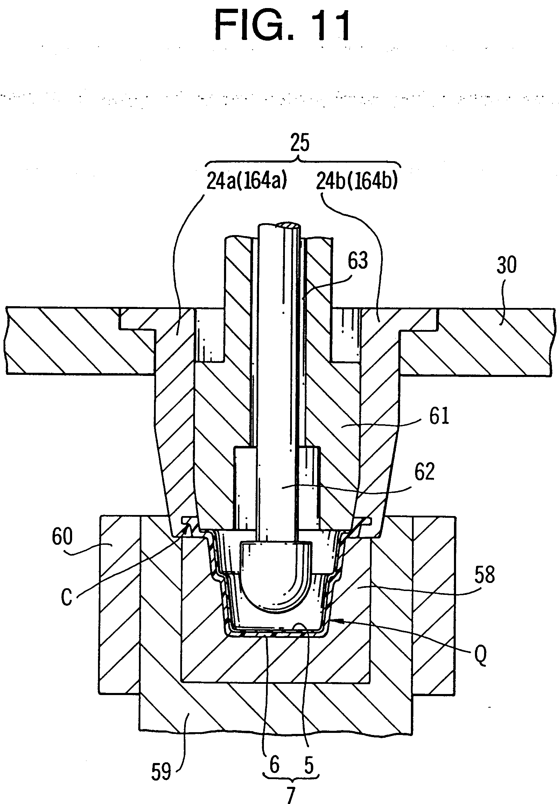

The preform 7, after the completion of the preform heating step, is then transferred to the container shaping stage C (Fig. 6) with being held by the mold 25 for holding. When the mold 25 which holds the preform 7 is set to a predetermined position, the clamping plate 15 descends to lower the upper mold unit 56, and the movable plate 16 is pushed down by the clamping plate 15 to descend, in accordance with which the mold 25 for holding descends. Simultaneously with the descending of the upper mold unit 56 and the mold 25 for holding, the elevating device 55 is operated to lift the lower mold unit 57. As a result, as shown in Fig. 7, the lower end outer periphery of the mold 25 for holding a preform is fitted to the upper end of the lower mold unit 57. Thus, the upper mold core 61 provided with the plug 62 is set to a predetermined container shaping position from an upper direction with respect to the preform 7. At this time, as shown in Fig. 11, the outer edge portion C of the preform 7 is interposed by the mold 25 for holding, the upper mold core 61 and the container lower mold 58 to be fixed and supported. Under this condition, the container shaping processing, that is the plug-assist forming processing is executed as follows. A reciprocal straight driving device 67 (Fig. 7) is hydraulically or pneumatically operated to lower the plug 62 by which the preform 7 is pressurized downwardly. Thereafter or simultaneously, the preform 7 is extended by air introduced through the air introducing hole 63. The preform 7 thus extended is shaped into a shape of the wall surface of the concave portion Q of the container lower mold 58, that is a cup shape, and as a result, the product container 1 as shown in Fig. 12 is obtained.

When the product container 1 is formed, as shown in Fig. 6, the upper mold unit 56 is lifted, and the lower mold unit 57 is lowered, and thereby the circumference of the mold 25 for holding which holds the product container is widely released. And then, the transfer plate 22 is rotated counterclockwise by 90° in Fig. 1 to convey the mold 25 for holding and hence the product container 1 to the container recovering stage D.

### Container recovering step

In the container recovering stage D shown in Fig. 1, the splittable molds 24a and 24b which constitute the mold 25 for holding are driven by the pneumatic cylinders 24d, and move in the radial direction so as to separate with each other as shown by the arrow E. This movement corresponds to the parallel movement in the direction of the arrow F in Fig. 8. Owing to this movement, the product container falls down from the both molds 24a and 24b and is recovered.

### After-treatment step

Using a cutting apparatus (not shown), the product container 1 can also be cut along the line X-X or the line Y-Y in Fig. 15. In this case, Providing the cutting apparatus in the container lower mold 58 or in the vicinity thereof in the container shaping stage (Fig. 6) makes possible to cut the container immediately after the completion of the container shaping. Of course, after the product container is withdrawn from the container lower mold 58, the cutting treatment for the container can be performed separately.

With respect to the as explained above, following modification can be applied.

The shape of the product container can be an optional shape, for example, a rectangular tray shape other than the cup shape for winding fastening as shown in Fig. 12. In this case, it is apparent that the shape of the sheet element piece 5 is prepared as a shape corresponding to the product container.

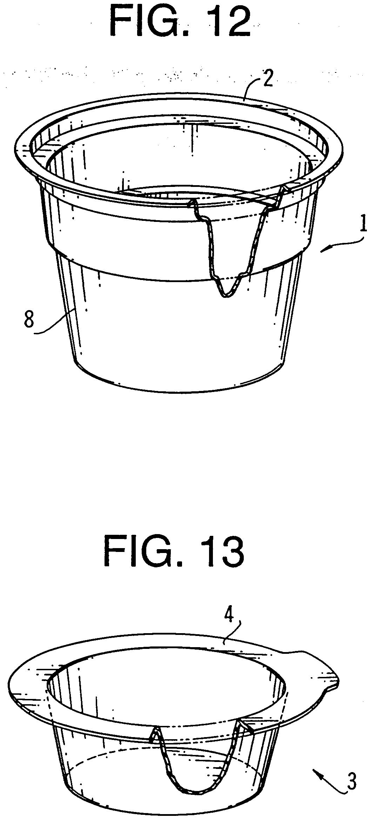

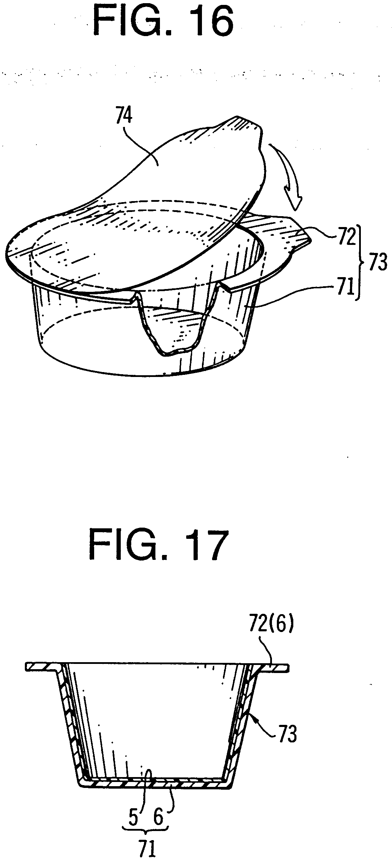

The shape of the product container can also be a cup shape for heat seal as shown in Fig. 13. this cup container 3 for heat seal has a flange 4 on which a heat seal cap 74 shown in Fig.16 having a thin plate shape is welded to secure. The heat seal cap 74 is heat-welded to this flange 4 to thereby tightly seal the inside of the container 3. It is necessary for the flange 4 for heat seal to have a thickness sufficient to resist to heat and pressure during the heat seal operation of the heat seal cap 74. In the present invention, a size and a thickness of the sheet element piece 5 and the injection resin layer 6 are optionally taken into account, thereby a flange 4 for heat seal corresponding to an object can be obtained.

If necessary, it is also possible to repeat the injection molding step several times to form the injection resin layer 6 as two or more layers. Further, in the above-mentioned example , the formation has been done such that the sheet element piece 5 side of the preform 7 becomes the inner surface of the product container 1, however, it is also available that the injection resin layer 6 side becomes the inner surface of the product container 1.

In the above-mentioned example, the sheet element piece 5 is used as the inner surface side of the container, wherein such arrangement has the following advantage.

The material which can be preferably used for the sheet element piece 5 is a material having a specific function such as saponified ethylene-vinyl acetate copolymer which is a resin having the gas barrier property and the polyester type resin which is a resin having the non-absorbing property, while the resin of the injection resin layer is a resin which serves as a main structural material of the container such as polypropylene, so that the resin of the injection resin layer generally has a higher molding applicability to a container shape such as the sheet forming. Therefore, the sheet element piece 5 is arranged at the inner surface side of the container upon the sheet forming, thereby the defective forming of the sheet element piece 5, that is dispersion in thickness, cracking during the sheet forming due to insufficient extension, can be prevented.

In addition, when the non-absorbing resin is used for the sheet element piece 5, this resin can achieve its object only after being arranged at a position to contact with the contents, so that it is preferable to be produced in the positional relationship as in the above-mentioned example.

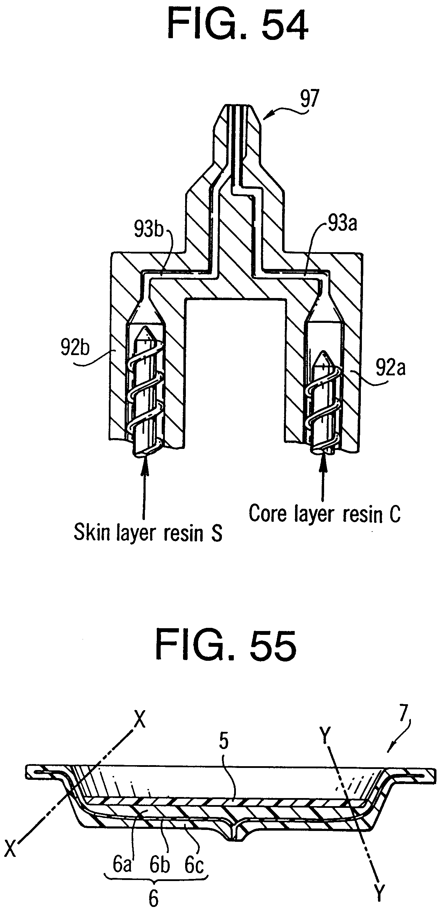

Further, the injection resin layer 6 (Fig. 15) can also molded as a multilayered structure by means of the multilayered injection molding, and in order to realize the above, an injection molding structure as shown in Fig. 54 can be provided at the interior of the hot runner 32. This injection molding structure has two cylinder blocks 92a and 92b. Resin flowing passages 93a and 93b extending from each of the cylinder blocks are coaxially overlapped at a nozzle portion 97, in which the right flowing passage 93a passes through the central portion, and the left flowing passage 93b passes through the outer circumferential portion thereof.

There are two kinds of resin layers injected from the hot runner 32, one of which is a core layer resin C being injected from the right cylinder block 92a and the other of which is a skin layer resin S being injected from the left cylinder block 92b in Fig. 54. When these resins are injected onto the lower surface of the sheet element piece 5 (Fig. 15), the core layer resin C becomes an intermediate resin layer 6b, and coating layers 6a and 6c which are constituted by the skin layer resin S are laminated on both upper and lower sides of the intermediate resin layer 6b, as shown in Fig. 55. For example, recycle PP may be used as the core layer resin C, and for example, non-used PP may be used as the skin layer resin S. By using Recycle PP as the intermediate resin layer 6b and by using non-used PP as the coating layer 6c at the outermost circumference, the recycle PP is effectively utilized, and the appearance of the preform 7 that is the appearance of the product container can be finished well.

### Example 2

The second example of the container production apparatus according to the present invention will now be explained. The second example is directed to a container with a cap as shown in Fig. 16. This container with a cap is constituted by a cup-shaped container 73 in which a flange 72 for heat seal is formed at the upper end of a container wall 71, and the heat seal cap 74 for tight sealing which is heat-welded to the flange 72 .The contents are accommodated in the interior of the container 73, and then the interior of the container is tightly sealed by the heat seal cap 74. In order to provide a specific function such as the gas barrier property or the like, the container wall 71 is formed to be a multilayered structure by laminating a plurality of specific resin materials. In such a container, the flange 72 is required to be exist in a even plane. If the flange and hence the seal surface is not flat, namely if the flange is deformed or waved, some non-sealed portion remains and it is difficult to completely seal the container.

The heat seal cap 74 usually contains a layer which is excellent in the gas barrier property such as an aluminum foil, an aluminum deposition film or the like, and a resin layer having an excellent heat-welding property is arranged at least the outer edge seal face or a face which serves as the inner surface. In order to properly perform the heat-welding of the heat seal cap 74, it is required that the resin which constitutes the flange 72 has a sufficient heat-welding property, and that the flange 72 is in the even plane, or the seal surface is flat.

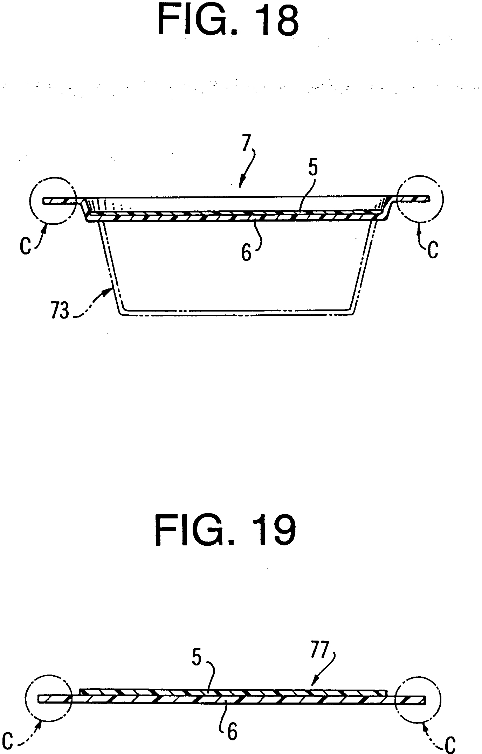

As in the same manner as the container production method of the first example having been explained, the production method for producing the container with a cap of the second example is constituted by each of steps of a sheet element piece preparing step for preparing a sheet element piece 5 (Fig. 14), an injection molding step for laminating an injection resin layer on one of surfaces of the sheet element piece 5 by injection molding to form a preform 7 (Fig. 18), aid a container shaping step for applying shaping processing such as vacuum forming or the like to the formed preform 7 to form a cup-shaped container 73 as the product container as shown by the chain line in Fig. 18.

Referring to Fig. 18, the characteristic point of the container with a cap of the second example is that the injection resin layer 6 is formed to be wider than the sheet element piece 5 with respect to the preform 7 formed by the injection molding step, and the outer edge portion C of the injection resin layer projects to the outside of the sheet element piece 5. And the above-mentioned container shaping step is performed with clamping the outer edge portion C, namely in a state of being fixed and supported. As a result, in the product container 73 finally obtained as shown in Fig.17, the container wall 71 is constituted by the multilayered resin layer in which the sheet element piece 5 and the injection resin layer 6 are laminated, and on the other hand, the flange 72 is constituted only by the injection resin layer 6. The injection resin layer 6 itself may be a single-layer or a multi-layer.

As the resin to be laminated on the surface of the sheet element piece 5 in the injection molding step, a thermoplastic resin such as PP, PS, PVC, PC or the like is employed. The thermoplastic resin has a mechanical strength with which a desired shape can be given to the container, and is provided with a heat-welding property for which it can be used as the flange 72 for heat seal.

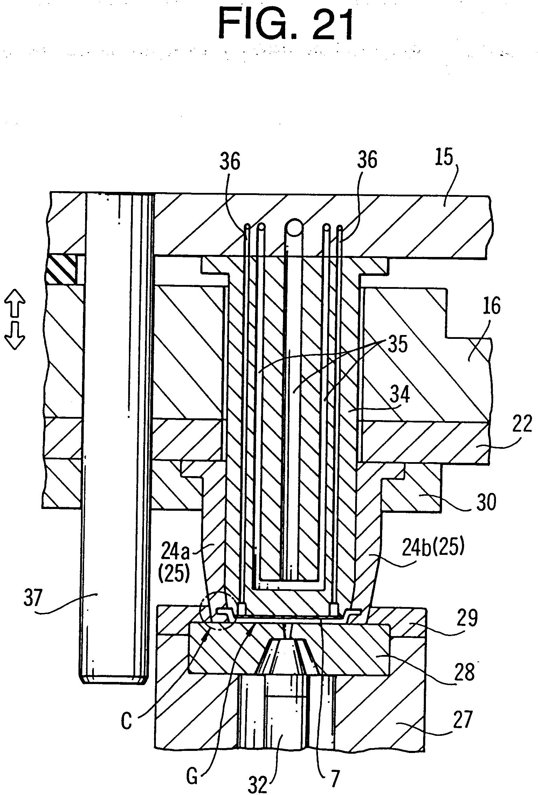

As the apparatus for carrying out the injection molding step, one which is basically the same as the injection molding apparatus in the first example shown in Fig. 8 can be used. However, in relation to the fact that the outer edge portion of the preform 7 is clamped, slight modification is given to the shape of the lower end of the injection core 34, as shown by the reference symbol C in Fig. 21.

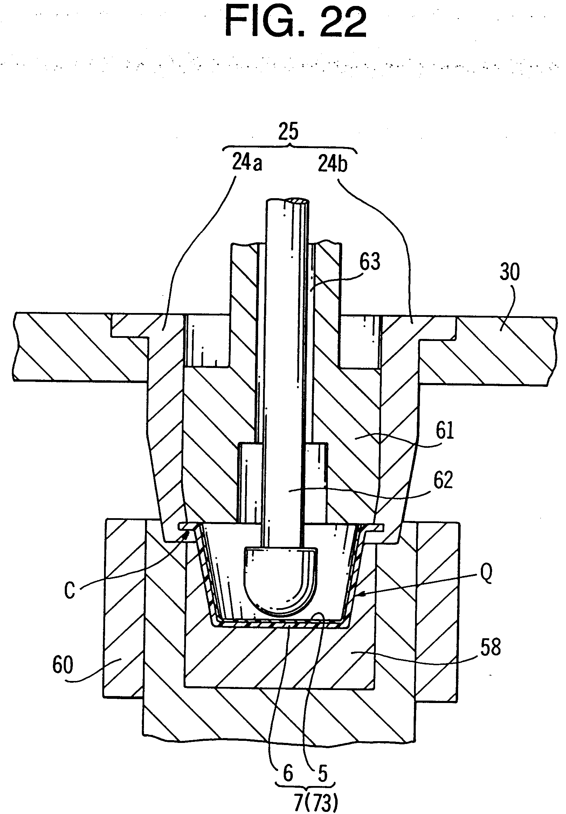

Also as the apparatus for carrying out the container shaping step, the plug-assist forming apparatus in the first example shown in Fig. 11 can be basically used. However, the aimed product container has a different shape, so that modification is given to the shape of the concave portion Q to be formed at the container lower mold 58, as shown in Fig. 22. In the present second example, during a period of the shaping processing of the container by both the plug 62 and air introduced through the air introducing hole 63, the outer edge portion C of the preform 7 is clamped by the upper mold core 61 and the molds for holding 24a and 24b.

The outer edge portion C of the preform 7 that is the outer edge portion C of the injection resin layer 6 is used as the heat seal flange 72 of the cup-shaped container 73 (Fig. 16) as it is. Therefore, the cutting treatment as shown in Fig. 15 in the first example is not performed. The outer edge portion C of the injection resin layer 6 is used as the flange of the product container as it is, so that even without the secondary processing, a flange which has a uniform thickness and shape accuracy being excellent in flat property can be obtained. Therefore, the container production method of the present second example is convenient as a production method of a container having a flange for a heat seal cap. Since the flange 72 is formed by the injection molding, its thickness is extremely uniform and its shape is also stable without deformation or waving, resulting in the increase in the heat seal property and the tight sealing property.

Conventionally, when a container is formed by using a material which has a resin layer inferior in the heat seal property at the inner surface side of the container, in order to allow a flange portion to have the heat seal property, it is necessary to perform secondary processing such as surface shaving or the like, which is economically disadvantageous as well as there is pollution due to foreign matters such as cutting chips and the like, so that it has been practically difficult to adopt such constitution. On the contrary, according to the production method of the present second example, if the sheet element piece 5 itself is a resin inferior in the heat seal property, the use of a resin which is excellent in the heat seal property such as polypropylene (PP) as the injection resin can give an excellent heat seal property to the container flange without applying any secondary processing. Therefore, limitation for resins capable of using as the inner surface side material of the container can be reduced.

Instead of the shape 7 with the flute as shown in Fig. 18, the shape of the preform 7 can also be a flat shape 77 having no flute as shown in Fig. 19.

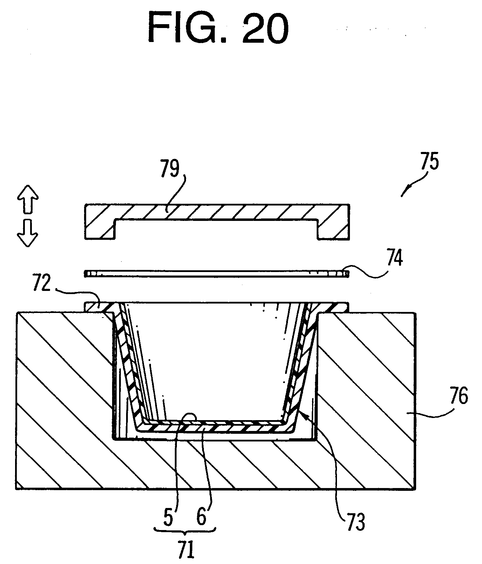

Fig. 20 shows one example of a heat seal apparatus 75 for welding the heat seal cap 74 to the cup-shaped container 73. This heat seal apparatus 75 has a lower mold 76 for receiving the flange 72 of the cup-shaped container 73 from the lower direction, and a heat plate 79 which is heated by a heating apparatus not shown in the figure. The heat plate 79 is constituted to be capable of moving in the upper and lower directions, which pushes the outer edge of the heat seal cap 74 to contact with the flange 72 when it moves downwardly, and gives heat to both the heat seal cap 74 and the flange 72 to weld the heat seal cap 74 to the flange 72.

### Example 3

The third example of a method for producing the container according to the present invention will be explained hereinafter. This example relates to a multilayered thin wall container with a flange as shown in Fig. 12.

As in the same manner as the container production methods of the first example and the second example having been explained, the container production method according to the present example has each of steps of a sheet element piece preparing step for preparing a sheet element piece 5 (Fig. 14), an injection molding step for laminating an injection resin layer onto one of surfaces of the sheet element piece 5 by injection molding to form a preform 7 (Fig. 23), and a container shaping step for applying shaping processing such as vacuum forming to the formed preform 7 to form a cup-shaped container 1 as the product container as shown by the chain line. In addition, the present container production method also has a container cutting step for cutting the cup-shaped container 1 at a position shown by the line X-X in Fig. 23. The peripheral edge portion C of the preform 7 works as a peripheral edge supporting portion for fixing and supporting the preform 7 in the above-mentioned container shaping step and the container cutting step. A flute portion E is a portion which remains as a flange 72 for winding fastening in Fig. 12 after the completion of the above-mentioned container cutting step.

As the injection molding apparatus for carrying out the injection molding step, the apparatus shown in Fig. 8 can be employed. For heating the preform 7 (Fig. 23) formed by the injection molding step, the heating apparatus shown in Fig. 9 can be employed.

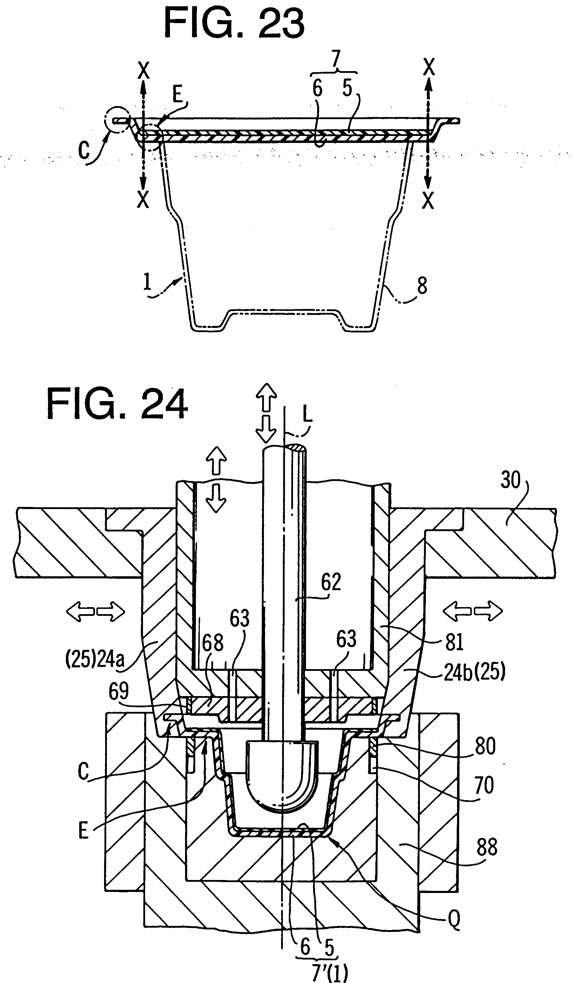

As the apparatus for carrying out both the container shaping step and the container cutting step, an apparatus shown in Fig. 24 can be used instead of the plug-assist forming apparatus shown in Fig. 11. In Fig.24, The apparatus has a container lower mold 88 which is connected with lower portions of splittable molds 24a and 24b, an upper mold core 81 which is capable of movement in the upper and lower directions, and a plug 62 which penetrates through the core 81 and is capable of movement in the upper and lower directions. A concave portion Q having an inner wall surface coinciding with the shape of the product container 1 (Fig. 12) is formed in the container lower mold 88.

A disk-shaped pressurizing member 68, being a disk shape around the central axis L, is provided at the lower end of the core 81, and a ring-shaped cutter 69, being a ring shape around the central axis L, is provided at the outer periphery of the pressurizing member 68. The pressurizing member 68 is driven by a driving mechanism not shown in the figure, which can perform reciprocal movement in the upper and lower directions in the figure in a manner independent from the core 81. The ring-shaped cutter 69 is driven by a driving mechanism not shown in the figure, which can perform reciprocal movement in the upper and lower directions in the figure in a manner independent from the core 81 and the pressurizing member 68. The core 81 and the pressurizing member 68 have through-holes 63 opened for introducing air.

At a position opposing to the ring-shaped cutter 69 in the container lower mold 88 is provided a ring-shaped groove 70 having a ring shape around the central axis L, and in the groove 70 is provided a ring-shaped receiving member 80. The ring-shaped receiving member 80 is usually placed at the position shown in the figure with being urged by an elastic urging means such as a spring. When the ring-shaped cutter 69 descends downwardly to pressurize the receiving member 80, the receiving member 80 descends downwardly in the groove 70 against the urging force.

The preform 7 formed by the injection molding step is then conveyed to the container shaping apparatus shown in Fig. 24 with being held at the peripheral edge supporting portion C by the mold 25 for holding constituted by the splittable molds 24a and 24b. Then, the upper mold core 81 provided with the plug 62 and the pressurizing member 68 are set to the shaping position shown in the figure from the upper direction of the preform 7 to carry out the container shaping step. In the container shaping step, owing to the downward movement of the plug 62, the preform 7 is pressurized downwardly, and simultaneously with which the preform is extended by air introduced by passing through the air introducing holes 63. The preform 7 thus extended is shaped into the wall surface shape of the lower mold concave portion Q that is the cup shape, and thus a product container portion 1 is shaped as shown by the chain line in Fig. 23.

When the container shaping step is completed as described above, in Fig. 24, with remaining the core 81 unmoved, the pressurizing member 68 and the cutter 69 or the pressurizing member 68 only are moved downwardly to press from the upper direction a flute portion E for the flange of the preform in a shaped state that is a preform as a partially manufactured item 7′. By means of this pressurizing, the flute portion E is formed to have a proper thickness for winding fastening, that is 0.4 to 0.6 mm, preferably 0.4 to 0.5 mm.

And then, with remaining the pressurizing member 68 unmoved, only the ring-shaped cutter 69 is allowed to descend to push and cut the flute portion E for the flange. Thus, a product container portion of the partially manufactured item 7′ of the preform is cut from the peripheral edge supporting portion C, to thereby obtain the product container that is the cup-shaped container 1 shown in Fig. 12.

According to the container with the flange and the production method of the container of the present example, the portion of the preform 7 which becomes the flange 2 in the product container 1 is the flute portion E for forming the flange (Fig. 23) which is extended by the shaping processing such as the vacuum forming or the like. Therefore, the flange 2 can be formed to be uniform and have a thin thickness. This fact is convenient for the case of winding and fastening the cap made of metal using the flange.

When the sheet element piece 5 is installed to the injection core 34 in Fig. 10, the installation position thereof sometimes deviates. Even when the installation position of the sheet element piece 5 deviates as described above, the sheet element piece 5 always exists at the flute portion E for forming the flange in Fig. 23. As a result, in the flange 2 of the cup-shaped container 1 in Fig. 12, the sheet element piece 5 always exists at all over its area. Since the sheet element piece 5 contains a resin layer having a specific function such as the gas barrier property, the fact that the sheet element piece 5 exists at all over the area of the flange 2 means that the gas barrier property can be ensured as the whole container.

In addition, in the plug-assist forming apparatus (Fig. 24), after the preform is shaped and processed into a desired shape, and before the flute portion E is cut, the flute portion E is pressurized by the pressurizing member 68, so that the flange 2 in the product container 1 (Fig. 12) can be formed to be much thinner and have a uniform thickness. Thus, the thickness of the flange 2 is formed to be much thinner, thereby it becomes possible to wind and fasten the cap made of metal with a sufficient fastening strength.

### Example 4

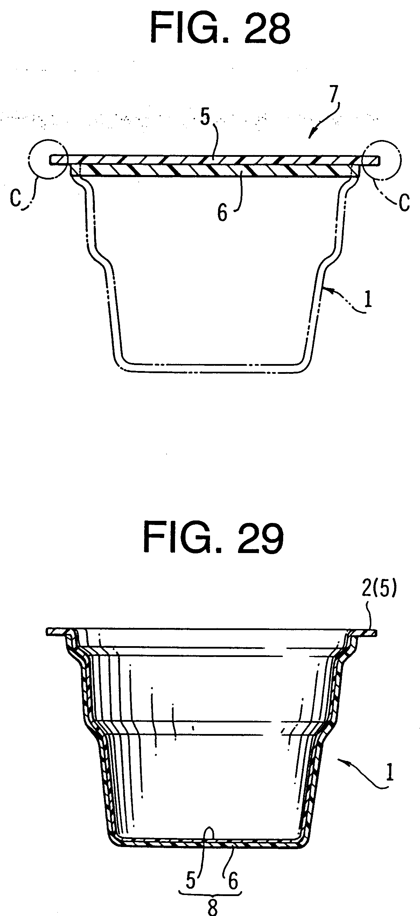

A container production method according to the fourth example is suitable for producing a cup-shaped container with a flange as shown in Fig. 12. This container production method is constituted by a sheet element piece preparing step for preparing a disk-shaped sheet element piece 5 having a single-layer or multilayered structure as shown in Fig. 14, an injection molding step for laminating an injection resin layer 6 onto one surface, for example, the lower surface in the figure, of the disk-shaped sheet element piece 5 as shown by the solid line in Fig. 28 by injection molding to form a preform 7, and a container shaping step for applying shaping processing such as vacuum forming to the formed preform 7 to form a cup-shaped container 1 as the product container as shown by the chain line. The thickness of the sheet element piece 5 is set to be 0.4 to 0.6 mm, preferably 0.4 to 0.5 mm.

As shown in Fig. 28, the preform 7 formed by the injection molding step has the injection resin layer 6 which is formed to be smaller than the sheet element piece 5, and the outer edge portion C of the sheet element piece 5 projects to the outside of the injection resin layer 6. The above-mentioned container shaping step is performed with clamping the outer edge portion C. As a result, as shown in Fig. 29, the finally obtained product container 1 is constituted by the container wall 8 composed of the sheet element piece 5 and the injection resin layer 6 and the flange 2 composed of only the sheet element piece 5.

The thickness of the injection resin layer 6 which is laminated on the sheet element piece 5 in the injection molding step is set, for example, to be about 1 mm. The container shaping step in which the preform is extended to form the product container is performed with clamping the outer edge portion C of the preform 7.

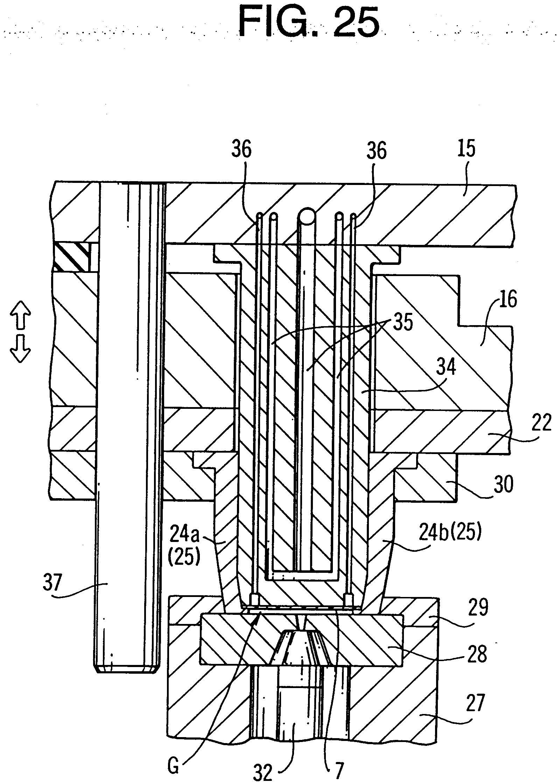

The injection molding step is carried cut, for example, by using an injection molding apparatus as shown in Fig. 25. As this injection molding apparatus, the injection molding apparatus used in the first example shown in Fig. 8 can be basically employed. However, with respect to the lower end shape of the injection core 34 and the lower end shapes of the splittable molds 24a and 24b for holding the preform, modification is given in accordance with the aimed preform 7 (Fig. 28) as shown in the figure.

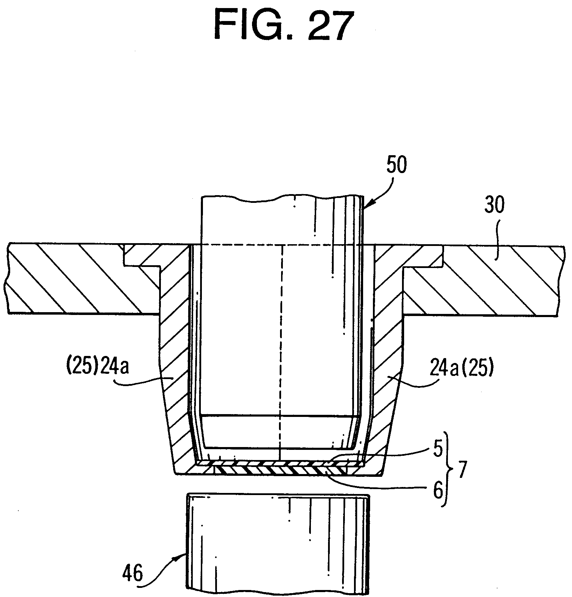

When the preform 7 formed by the injection molding step is heated, the preform 7 is heated from the upper and lower directions by means of a preform heating apparatus comprising an upper heater unit 50 and a lower heater unit 46, as shown in Fig. 27.

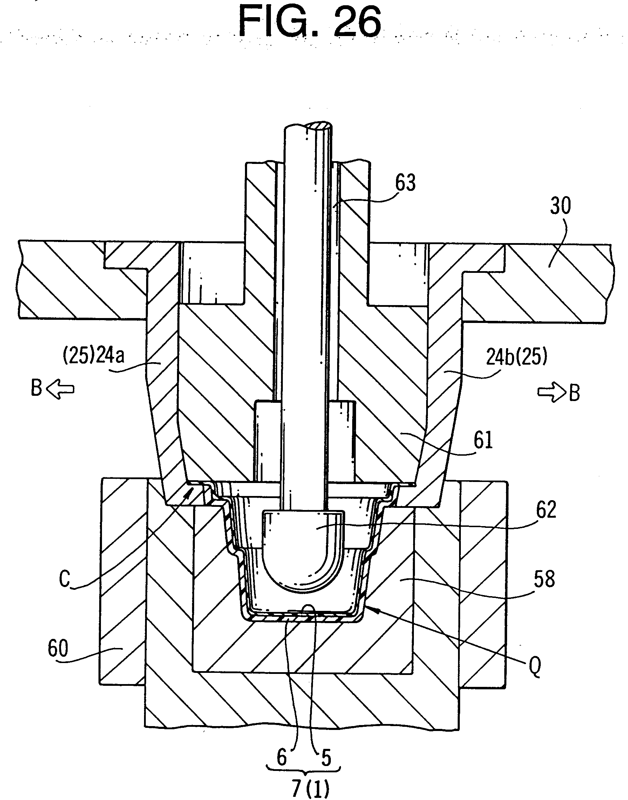

As the apparatus for carrying out the container shaping step, a plug-assist forming apparatus as shown in Fig. 26 can be used. This plug-assist forming apparatus is basically the same as the plug-assist forming apparatus according to the first example shown in Fig. 11. The difference between them is that the flange portion C of the preform 7 is clamped, or pressurized by the bottom surface of the upper mold core 61.

After the completion of the container shaping step, when the splittable molds 24a and 24b which hold the product container in Fig. 26 are released in the direction of the arrow B, the product container 1 can be exactly taken out from the mold. The flange 2 of the product container 1 thus produced is the sheet element piece 5 itself. The sheet element piece 5 is set to have a thickness of 0.6 mm or less, so that the obtained container flange 2 also has the same thickness. Thus, without performing any secondary processing, the flange having a thin thickness can be obtained. When the thickness of the container flange 2 is 0.6 mm or less, the winding fastening (see Fig. 31) can be performed well.

### Example 5

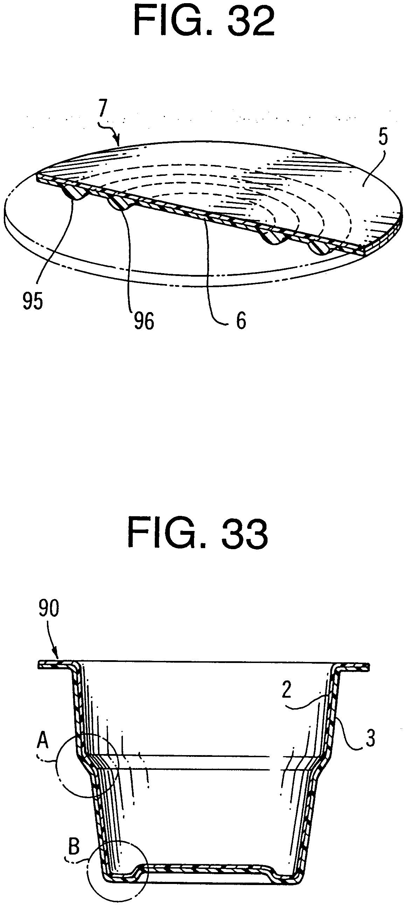

Fig. 32 shows a preform which is produced in the fifth example of the container production method according to the present invention. This preform 7 is formed by overlapping an injection resin layer 6 on the lower surface of a disk-shaped sheet element piece 5 having a specific function such as the gas barrier property by injection molding. The sheet element piece 5 comprises a single-layer or multilayered resin layer depending on types of the specific function intended to obtain. This preform 7 is applied with the shaping processing such as vacuum forming, and thereby the product container 90 having a side cross-sectional shape as shown in Fig. 33 is produced. This product container 90 has two curved portions A and B, and the extending ratio of the portions corresponding to these curved portions during the shaping processing of the preform 7 is larger than extending ratio of other portions. As shown in Fig. 32, thick wall portions 95 and 96 are formed in the preform 7 at the portions corresponding to the above-mentioned curved portions A and B. Any of these thick wall portions 95 and 96 is formed by making the wall thickness of the injection resin layer 6 to be thick, which projects in the opposite direction of the sheet element piece 5.

As described above, the preform 7 has the thick wall portions 95 and 96 corresponding to the curved portions being appeared during the shaping processing, those are the portions having a large extending ratio, so that there is no event in which the wall thicknesses of the curved portions A and B of the finished product container 90 become too thin as compared with other portions, and it is possible to finish to give a uniform wall thickness over the whole.

With respect to a container which is applied to heating treatment such as retort sterilization, if the wall thickness of the container is uneven, there is a fear of occurrence of inconvenience such as deformation, breakage and the like after the retort sterilization treatment. On the contrary, with respect to the product container 90 formed from the above-mentioned preform 7 provided with the thick wall portions 95 and 96, there is no occurrence of such a thin wall portion, and hence, it can be used as the container for retort sterilization without any problem.

The production method for producing the preform 7 and the product container 90 will be explained hereinafter referring to one example.

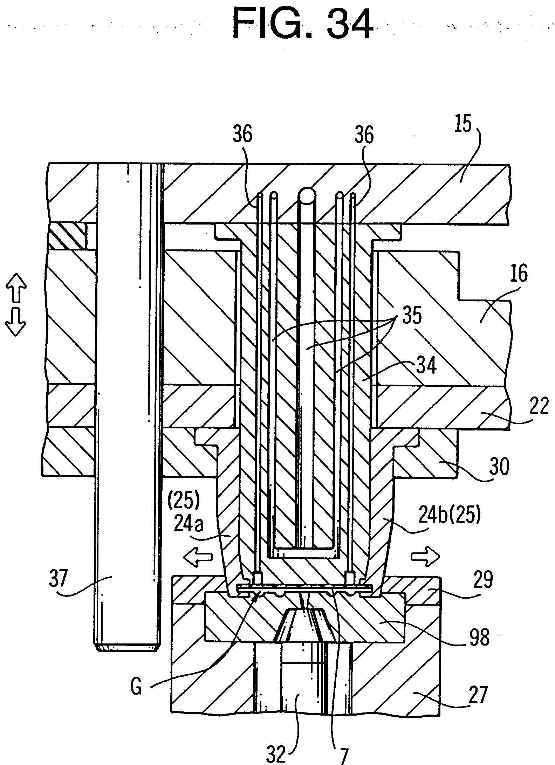

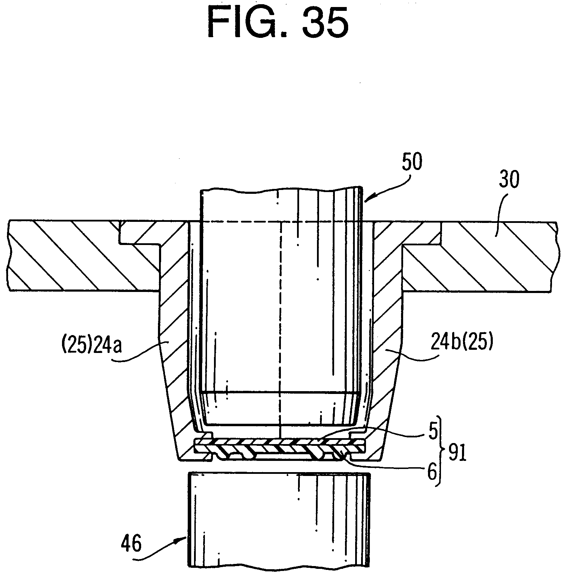

Fig. 34 shows an injection molding apparatus, and Fig. 35 shows a preform heating apparatus. The preform 7 is formed by the injection molding apparatus (Fig. 34), and the preform 7 thus obtained is heated by the preform heating apparatus (Fig. 35), which is further applied with shaping processing by means of the plug-assist forming apparatus (Fig.11), thereby the product container 90 is produced.

The injection molding apparatus in Fig. 34 is basically the same as the apparatus shown in Fig. 8. However, in relation to the fact that the outer diameter of the sheet element piece 5 is equal to the outer diameter of the injection resin layer 6 in the aimed preform 7 shown in Fig.32, modification is given to the lower end portions of the splittable molds 24a and 24b for holding the preform. In addition, for forming the thick wall portions 95 and 96 on the bottom surface of the injection resin layer 6, two ring-shaped concave portions coinciding with the shapes of these thick wall portions are formed at the upper surface of the injection cavity 98.

The preform heating apparatus in Fig. 35 is the same as the apparatus shown in Fig. 9. When the preform 7 is heated by the heating apparatus shown in Fig. 35, the thick wall portions 95 and 96 approach the lower heater unit 46 more closely as compared with other portions. This allows the wall thick portion having bad heat efficiency to be certainly heated. The number of the thick wall portions is not limited to two, which can be less or more depending on the shape of the product container.

### Example 6

An example 6 which will be explained hereinafter, has a purpose to increase a workability, which is obtained by performing the forming step of the sheet element piece and the injection molding step approximately simultaneously in one step.

In the following explanation, the target product container of the production method of this example is a cup container 1 for winding fastening as shown in Fig. 12. In the container production method of the present example, a preform is produced by a sheet element piece preparing step in which one sheet element piece is punched from a band-shaped sheet raw material having a long length, and an injection molding step in which an injection resin layer is laminated on the sheet element piece to form the preform. And the shaping processing such as vacuum forming is applied to the produced preform to produce the product container.

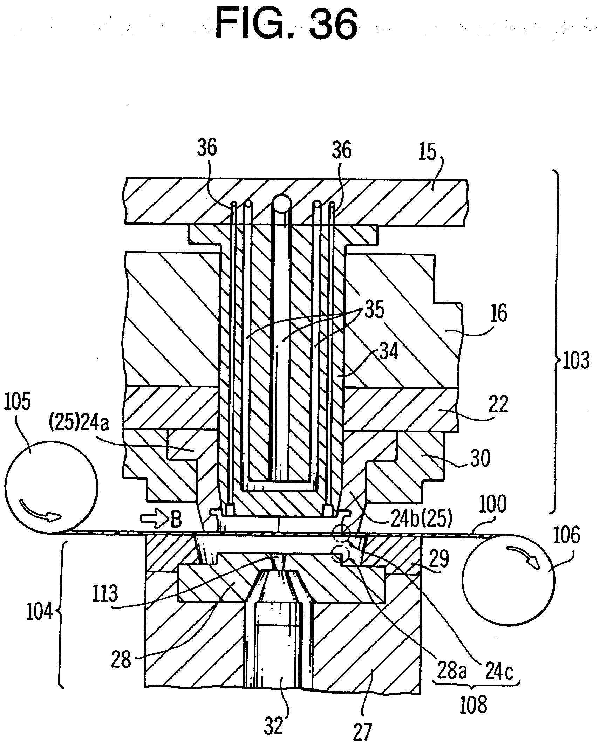

Fig. 36 shows an injection molding apparatus in which the sheet element piece preparing step and the injection molding step are simultaneously carried out. This apparatus is employed instead of the injection molding apparatus shown in Fig. 8. This injection molding apparatus has a pair of opposing molds, namely an upper mold 103 and a lower mold 104. In the upper mold 103 and the lower mold 104, members indicated by using the same reference numerals as the reference numerals used in Fig. 8 indicate the same members, so that explanation thereof is eliminated.

The lower end peripheral edge 24c of the splittable molds 24a and 24b for holding the preform and the upper end outer peripheral edge 28a of the projecting portion of the injection cavity 28 constitute a punch portion 108 for shearing a band-shaped sheet raw material 100 existing between the both. The inner peripheral edge 24c of the splittable molds 24a and 24b and the outer peripheral edge 28a of the injection cavity 28 are fitted with each other without clearance when the upper mold 103 and the lower mold 104 are clamped, or jointed with each other under pressure. Upon this fitting, the shearing force acts on the sheet raw material 100 existing between the both, and thereby the sheet raw material 100 is sheared at the position of the punch portion 108.

A sheet raw material supplying apparatus 105 is provided at the left side of the injection molding apparatus, and a sheet raw material winding apparatus 106 is provided at the right side thereof. The film-shaped sheet raw material 100 sent from the sheet raw material supplying apparatus 105 is conveyed to the direction of the arrow B and passes between the upper mold 103 and the lower mold 104 to be wound by the sheet raw material winding apparatus 106.

The sheet element piece preparing step and the injection molding step are performed as follows.

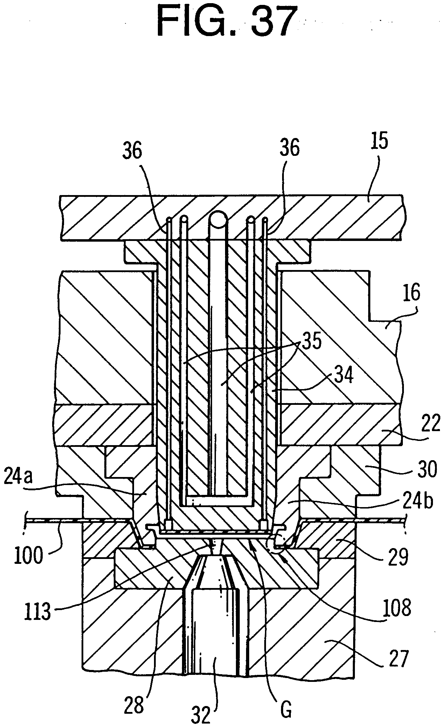

As shown in Fig. 36, under the condition in which the upper mold 103 is placed at a released position with respect to the lower mold 104, the film-shaped sheet raw material 100 is inserted between the both molds 103 and 104 by means of the sheet raw material supplying apparatus 105. And then, the upper mold 103 is lowered downwardly, and as shown in Fig. 37, the both molds 103 and 104 are set to the clamping position. During this time, owing to the fitting of the punch portion 108, namely the fitting of the upper end outer edge 28a of the projecting portion of the cavity 28 and the lower end inner edge 24c of the molds 24a and 24b for holding, the sheet raw material 100 is sheared, which is cut into the disk-shaped sheet element piece 5 as shown in Fig. 14. In Fig. 37, the sheet element piece 5 thus cut is sucked by air flowing in the air suction passage 36 to be absorbed and fixed to the lower end of the injection core 34. The installed sheet element piece 5 uses its upper face which is brought into contact with the core 34 as the inner surface of the container.

Since the following steps are the same as those of the cases of the previous examples shown in Fig. 8, Fig. 9 and Fig. 11, explanation of which is eliminated.

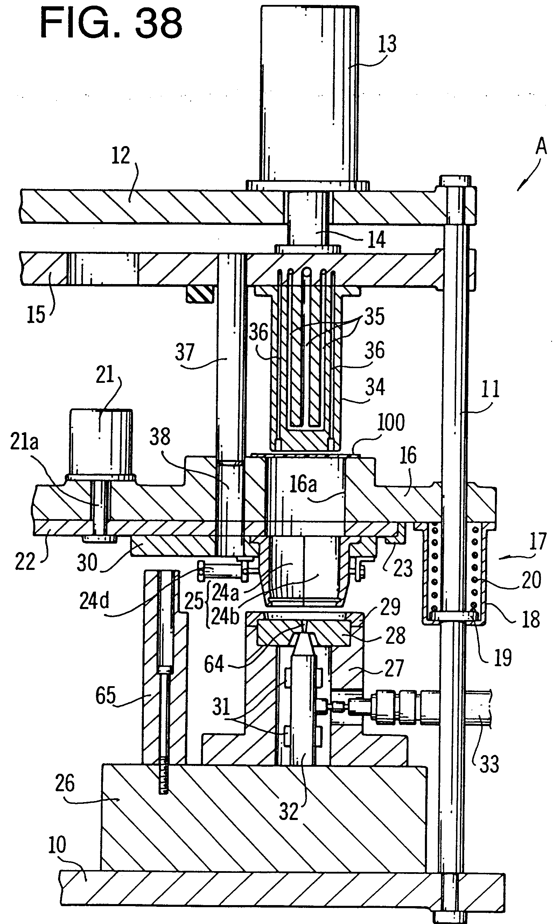

Fig. 38 shows another example of the injection molding apparatus for carrying out the sheet element piece preparing step and the injection molding step. In the injection molding apparatus shown herein, the lower end outer peripheral surface of the injection core 34 is fitted to the through-hole 16a provided in the movable plate 16 with little clearance. In addition, between the bottom surface of the injection core 34 lifted to the uppermost position and the upper surface of the movable plate 16 is inserted the long sheet raw material 100 in the direction perpendicular to the plane of Fig. 38. When the injection core 34 descends, Fitting of the injection core 34 and the movable plate 16 shears the sheet raw material 100 to produce one sheet element piece.

As described above, in the present example, when the pair of opposing molds are clamped for producing the preform by injection molding, then the single body sheet element piece is automatically produced from the film-shaped sheet raw material. Therefore, no pre-step for punching the sheet element piece is necessary, resulting in increasing of workability. In a case where the sheet element piece is produced beforehand, and thereafter it is installed to the inside of the mold, a robot which exclusively serves for the installation becomes necessary, resulting in a high cost. On the contrary, no such exclusive robot is necessary in the present example, so that it is economical.

Further, when the sheet element piece is produced beforehand and it is thereafter installed to the inside of the mold, in order not to make a mistake for the front or back of the sheet element piece, it is necessary to provide a special mechanism to avoid such a mistake. On the contrary, in the present example, once the front or back of the film-shaped sheet raw material is determined, the front or back of the sheet element piece punched therefrom is automatically determined, in which there is no possibility of occurrence of the mistake.

### Example 7

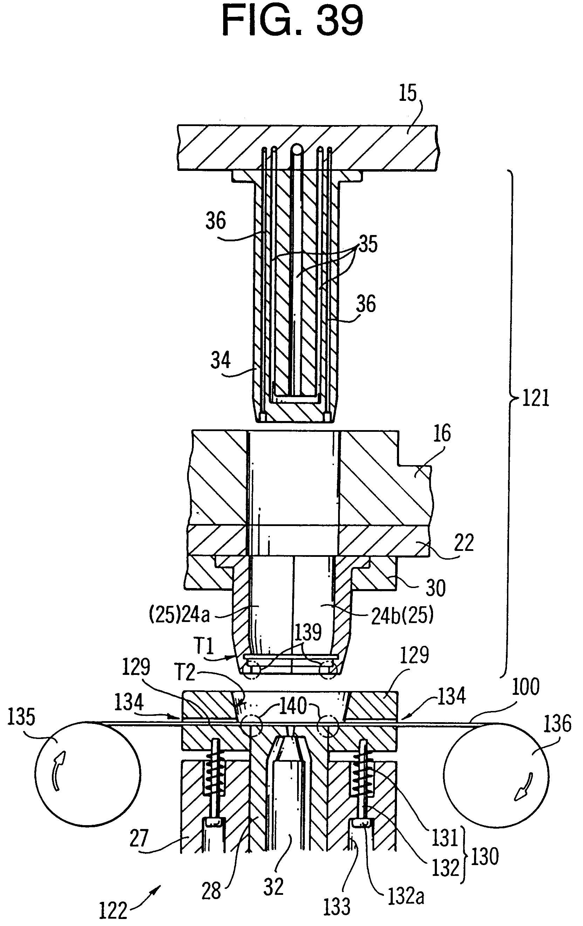

Fig. 39 shows the seventh example of an injection molding apparatus which is provided with a sheet raw material punching function for applying punching processing to a long sheet raw material to produce one sheet element piece, and a preform producing function for laminating a resin layer on the surface of the sheet element piece by injection molding to produce a preform together. This injection molding apparatus can be employed in the container production apparatus shown in Fig. 1 instead of the injection molding apparatus shown in Fig. 8.

In Fig. 39, the injection molding apparatus has a movable mold 121 and a fixed mold 122 which are disposed opposite to each other. The movable mold 121 comprises an injection core 34 and splittable molds 24a and 24b.

The fixed mold 122 has a cavity base 27, an injection cavity 28 and an auxiliary mold 129. At the inner peripheral surface of the auxiliary mold 129 is provided a taper T2 having a slope which is equal to that of a taper T1 provided at the lower end outer peripheral surface of the splittable molds 24a and 24b. Between the auxiliary mold 129 and the cavity base 27 are provided one or a plurality of elastic urging apparatuses 130 for elastically urging the auxiliary mold 129 in the direction towards the movable mold 121. The elastic urging apparatus 130 is constituted by a compression spring 131 which is provided between the lower surface of the auxiliary mold 129 and the cavity base 27, and a screw 132 which penetrates through the compression spring 131. The forward end of the screw 132 is subjected to be threadedly fitted with the bottom portion of the auxiliary mold 129. The auxiliary mold 129 is elastically urged by the spring 131 toward the upper direction in the figure, which stands still in a state in which the head portion 132a of the screw 132 abuts against the upper surface of a back facing hole 133 provided in the cavity base 27.

The position at which the auxiliary mold 129 stands still is set to a position at which the receiving surface 129a for the sheet raw material of the auxiliary mold 129 is at the same as the upper end surface of the injection cavity 28 or projects in the upper direction therefrom. The position at which the auxiliary mold 129 stands still can be controlled by controlling a screwing length of the screw 132 inserted into the auxiliary mold 129.

At the central portion in the cross-section of the auxiliary mold 129, that is the lowermost end position of the taper T2 are opened a pair of slit-shaped openings 134 which are slightly larger than a plate thickness of the sheet raw material 100 and have a width in the direction perpendicular to the plane of Fig. 39 which is slightly wider than a width of the sheet raw material 100 in the direction perpendicular to the plane of Fig. 39. The sheet raw material 100 having a long length provided by stretching between a supplying roll 135 and a winding roll 136 is arranged with closely or directly contacting with the upper end surface of the injection cavity 28 through the openings 134.

The lower end inner peripheral edge of the splittable molds 24a and 24b serves as an outside punch portion 139, and the upper end outer peripheral edge of the injection cavity 28 serves as an inside punch portion 140.

The operation of the injection molding apparatus consisting of the above-mentioned constitution will be explained hereinafter.

At first, as shown in Fig. 39, the fixed mold 122 and the movable mold 121 are placed at the releasing positions in which they are separated with each other. Under this condition, the supplying roll 135 and the winding roll 136 rotate to feed a non-punched portion of the sheet raw material 100 to the upper surface of the injection cavity 28. During this feeding operation, the sheet raw material 100 is guided by the slit-shaped openings 134 of the auxiliary mold 129 to be always placed at a constant position with respect to the injection cavity 28.

And then, the movable mold 121, namely the injection core 34, the splittable molds 24a and 24b and the like move downwardly, and as shown in Fig. 40, the lower end portions of the splittable molds 24a and 24b fit into the auxiliary mold 129. During this time, the tapers T1 and T2 are fitted with each other, so as to guide the outside punch portion 139 of the splittable molds 24a and 24b toward the inside punch portion 140 of the injection cavity 28.

When there is given a state in which the lower end surfaces of the splittable molds 24a and 24b pressurize to auxiliary mold 129 via the sheet raw material 100, owing to the biasing force of the spring 131 of the elastic urging apparatus 130, the sheet raw material 100 is pinched by the auxiliary mold 129 and the splittable molds 24a and 24b. The pinching force against the sheet raw material 100 can be freely set by optionally by selecting a spring constant or a spring stroke of the spring 131.

After the sheet raw material 100 is pinched as described above, the splittable molds 24a and 24b still move downward. During the movement, owing to the fitting of the outside punch portion 139 and the inside punch portion 140, the sheet raw material 100 is sheared to be formed into a disk-shaped sheet element piece 5 as shown in Fig. 14. The obtained sheet element piece 5 is sucked by air flowing in the air suction passage 36 to be absorbed to the lower end surface of the injection core 34.

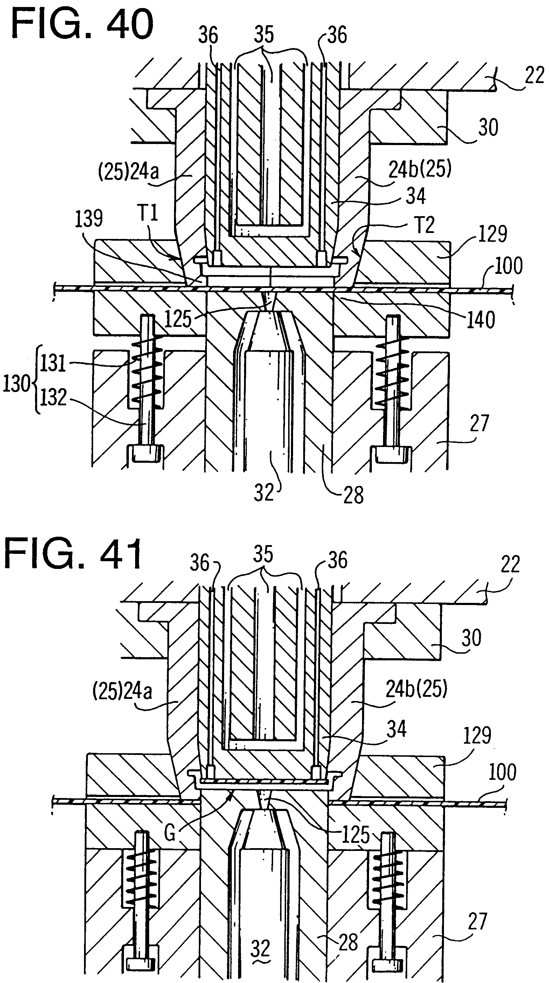

After the sheet element piece 5 is prepared, the splittable molds 24a and 24b still continue the movement until ,as shown in Fig. 41, they stop in a manner in which the upper end of the injection cavity 28 enters into the inside of the splittable molds 24a and 24b by a predetermined length, namely at a position at which the bottom surface of the auxiliary mold 129 abuts against the upper surface of the cavity base 27. This position is the clamping position for the injection cavity 28 and the splittable molds 24a and 24b. At this clamping position, between the splittable molds 24a and 24b and the injection cavity 28 is formed an injection space G coinciding with the shape of the preform 7 (Fig. 15).

When the splittable molds 24a and 24b and the injection cavity 28 are clamped to the clamping position, a resin is injected from the hot runner 32, and the resin is supplied to the interior of the injection space G through the gate 125. Thus, as shown in Fig. 15, the preform 7 is formed in a state in which the injection resin layer 6 is laminated on the lower surface of the sheet element piece 5.

Though the detailed illustration in drawings is omitted, the preform 7 is thereafter applied with shaping processing by the stretching blow forming, for example, vacuum forming, air-pressure forming, plug-assist forming, and thus a product container having a desired shape is produced.

When the splittable molds 24a and 24b in the movable mold 121 move from the state in Fig. 40 to the state in Fig. 41, namely when the splittable molds 24a and 24b and the injection cavity 28 transit from the non-fitting state to the fitting state, the lower ends of the splittable molds 24a and 24b are guided by the auxiliary mold 129 to correctly fit to the injection cavity 28. Thus, the outside punch portion 139 and the inside punch portion 140 correctly fit with each other without mutual collision, and hence, abrasion of the both punch portions 139 and 140 can be reduced.

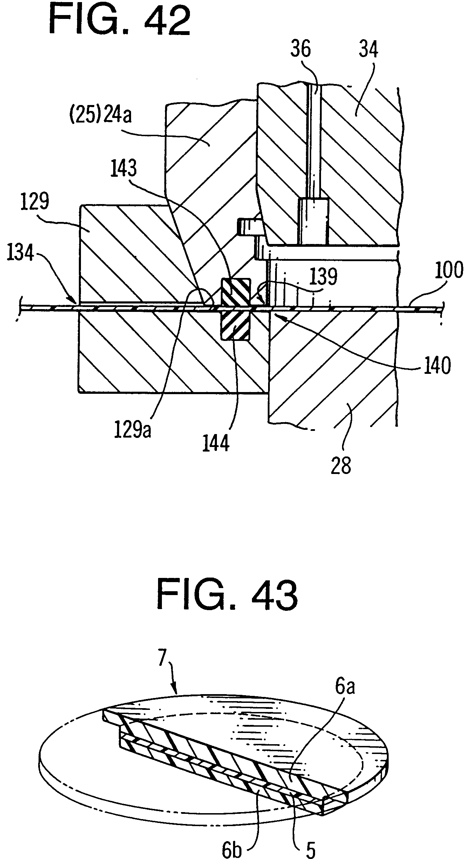

Fig. 42 shows a modified example with respect to the splittable molds 24a and 24b and the auxiliary mold 129. The feature of this modified example is that at the inside of the lower ends of the splittable molds 24a and 24b are provided pinching members 143 in a ring form or at a plurality of positions on a circular locus, and in order to oppose to this or these pinching members 143, at the inside of the upper end of the auxiliary mold 129 is provided a pinching member 144 having the same shape and the same material quality. These pinching members 143 and 144 are provided with slightly projecting from the lower end surfaces of the splittable molds 24a and 24b and the bottom surface 129a of the auxiliary mold 129. These pinching members 143 and 144 are formed with a material having a high friction coefficient and having elasticity, for example a urethane resin.

AS described hereinabove, When the sheet raw material 100 is punched by the outside punch portion 139 of the splittable molds 24a and 24b and the inside punch portion 140 of the injection cavity 28, the sheet raw material 100 is pinched by the bottom surfaces of the splittable molds 24a and 24b and the sheet raw material receiving surface 129a of the auxiliary mold 129. In the present example in which the pinching members 143 and 144 are provided at the opposing surface of the splittable molds 24a and 24b and the auxiliary mold 129, during the punching of the sheet raw material 100, the sheet raw material 100 is pinched by these pinching members 143 and 144. The splittable molds 24a and 24b and the auxiliary mold 129 are usually formed with a metallic material, so that there might be a fear that the sheet raw material 100 cannot be certainly pinched due to sliding, however, when the sheet raw material 100 is pinched by the pinching members 143 and 144 having a high friction coefficient and elasticity, then such sliding of the sheet raw material 100 does not take place. Incidentally, it is also available to provide the pinching member at any one of the splittable molds 24a and 24b and the auxiliary mold 129.

The injection molding apparatus of the present example makes it possible that the both steps of the sheet element piece preparing step for punching the long sheet raw material to produce the sheet element piece and the injection molding step for laminating the injection resin layer on the surface of the sheet element piece to produce the preform can be performed by one injection molding apparatus at one stage. Further, it is unnecessary to provide a special driving system for punching the sheet element piece other than the driving system which generates the clamping force. As a result, the structure of the injection molding apparatus can be made simple, and the apparatus can be produced at a low price.

During the punching of the sheet raw material, the sheet raw material is pinched under a predetermined pressure by means of the mold provided with the outside punch portion and the auxiliary mold. Therefore, during the punching of the sheet raw material by the outside punch portion and the inside punch portion, the sheet raw material is never deviated or deformed, resulting in a reliable pinching operation.

### Example 8

Fig. 43 shows a preform which is produced by an injection molding step in a production method of a multilayered thin wall container according to the eighth example. The special object of this example is to make it possible to produce a preform having a layer structure of three or more layers at a low price and to allow the preform to easily extend in the stage in which the preform is shaped into a container even when a material layer difficult to extend is contained in the preform.

The preform 7 shown in Fig. 43 is formed by laminating a first resin layer 6a on the upper side of one disk-shaped sheet element piece 5 by injection molding, and laminating a second resin layer 6b on the lower side of the sheet element piece 5 by injection molding in the same manner. For example, the layer constitution of this preform can be set as follows. Numerical figures are those indicating a thickness of each layer by µm.

### Instance 1

First injection resin layer 6a: PP700
Sheet element piece 5:
AD(adhesive resin) 50 / EVOH100 / AD50
Second injection resin layer 6b: PP700

### Instance 2

First injection resin layer 6a: PP700
Sheet element piece 5: AD50 / PVDC25 / AD50
Second injection resin layer 6b: PS700

### Instance 3

First injection resin layer 6a: PP500
Sheet element piece 5:
AD50 / EVOH100 / AD50 / scrap recovered resin 500 Second injection resin layer 6b: PP700

The layer structure of the sheet element piece 5 may employ the following layer structures.
There are given as a two-layer structure:
Scrap recovered resin / EVOH, PP / EVOH, PET / PVDC and the like,
and as a three-layer structure:
PET / EVOH / PP,
desiccant kneaded polyolefin / EVOH /desiccant kneaded polyolefin,
PP / PVDC / PP and the like.

The above-mentioned preform is subjected to shaping processing such as vacuum forming, which is shaped into a multilayered thin wall container as shown, for example, in Fig. 12. The first injection resin layer 6a and the second injection resin layer 6b mainly give the mechanical strength to the container. Depending on the specific function possessed by the resin contained in the sheet element piece 5 as the intermediate layer, a specific function is given to the finished container. For example, since the preform according to Instance 1 contains EVOH in the sheet element piece 5, the gas barrier property is given to the finished container. As described above, the gas barrier property, moisture resistance, heat resistance, adhering property and the like are considered as the specific function to be given to the sheet element piece 5. Since the sheet element piece 5 in the present example is arranged at the intermediate position of the injection resin layer, the flavor barrier property, that is a property for blocking flavor components vaporising toward the outside passing through the container wall and thereby keeping the flavor components, can be possessed. The flavor barrier property can be achieved the following resins:
PET, EVOH, polyacrylonitrile (PAN) and the like

The production method for producing the preform in Fig. 43 and the product container in Fig. 12 will now be explained.

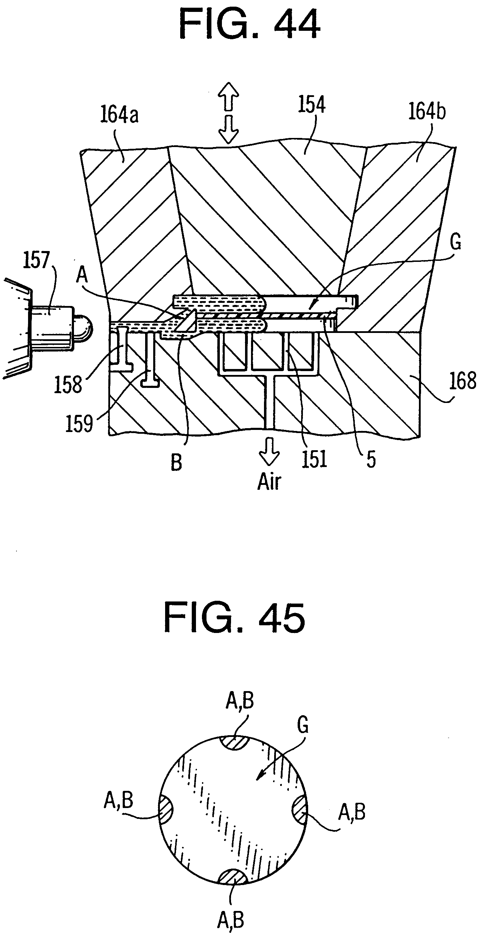

Fig. 44 shows an injection molding apparatus for producing the preform. This apparatus is used in the container production apparatus in Fig. 1 instead of the injection molding apparatus in Fig. 8. In Fig. 44, an injection core 154 and splittable molds 164a and 164b for holding the preform are integrally provided in a manner capable of ascending and descending movement. An injection cavity 168 is provided at a lower position therefrom. When the splittable molds 164a and 164b and the cavity 168 are jointed with each other, an injection space G is formed in the mold comprising the cavity 168, the splittable molds 164a and 164b and the core 154. At the inside of the cavity 168, air suction passages 151 are provided in order to fix so as not to move the sheet element piece during a period after supplying the sheet element piece 5 and before the beginning of the injection molding.

At the lower end of the splittable molds 164a and 164b is formed a first gate A communicating with the injection space G, and at the cavity 168 is formed a second gate B communicating with the injection space G in the same manner. The resin emitted from an injection molding nozzle 157 passes through the both gates A and B and is injected from both the upper and lower directions into the injection space G. In Fig. 44, the reference numeral 158 indicates a lock pin, and the reference numeral 159 indicates an ejector pin. As shown in Fig. 45, the first gate A and the second gate B may be provided as four individuals for each of them in arrangement of equal angle interval by 90° in the circumference direction, respectively.

The container production step carried out by the injection molding apparatus (Fig. 44), the preform heating apparatus (Fig. 9) and the plug-assist forming apparatus (Fig. 11) will now be explained. The disk-shaped sheet element piece 5 is produced beforehand by a suitable production method, for example, by punching from one long sheet raw material. And in Fig. 44, the core 154 and the splittable molds 164a and 164b are separated from the cavity 168 and lifted upwardly. In that separated state, the sheet element piece 5 is installed to the upper surface of the cavity 168, which is sucked and held by air flowing in the air suction passage 151.

And then, the core 154 and the splittable molds 164a and 164b are lowered, and the splittable molds 164a and 164b and the cavity 168 are jointed with each other to form the injection space G. After stopping the air suction by the air suction passage 151 so as to allow the sheet element piece 5 to freely ascend and descend in the injection space G, the resin is injected with the injection molding nozzle 157 to be poured into the injection space G to form the preform. As shown in Fig. 44, the injection resin is simultaneously injected into the injection space G from the gates A and B, so that the sheet element piece 5 is successively lifted in the injection space G from a position at which the gate is present, which is positioned at an intermediate position in the space G in an approximately parallel manner. Therefore, the preform is formed in such a mannner that two injection resin layers are laminated at both front and back surfaces of the sheet element piece 5. When the gates are provided in the circumferential direction at a plurality of places as shown in Fig.45, the sheet element piece 5 moves in parallel by the injected resins, so that the arrangement into the intermediate position becomes more accurate.

After completion of the molding, the splittable molds 164a and 164b are separated from the cavity 168, and at this time, the runners existing at the first gate A and the second gate B are disengaged. And then, the ejector pin 159 is operated to remove the runners at the gate portions.

When the injection molding step is completed and the preform is produced, with being held by the splittable molds 164a and 164b, the preform is transferred to the preform heating stage (Fig. 9). In this heating stage, the preform 7 is heated by the upper heater unit 50 and the lower heater unit 46. The heated preform 7 is then transferred to the container shaping stage (Fig. 11) with being held by the splittable molds 164a and 164b. In this container shaping stage, the upper mold core 61 provided with the plug 62 is set to the shaping position shown in the figure from the upper direction of the preform 7, and the container shaping processing is carried out as follows. Namely, owing to the downward movement of the plug 62, the preform 7 is pressurized downwardly, and the preform 7 is simultaneously extended downwardly by air sent after passing through the air introducing hole 63. The preform 7 thus extended is shaped into the wall surface shape of the concave portion Q of the lower mold 58, that is the cup shape, and thereby the product container having the multilayered thin wall structure as shown in Fig. 12 is obtained.

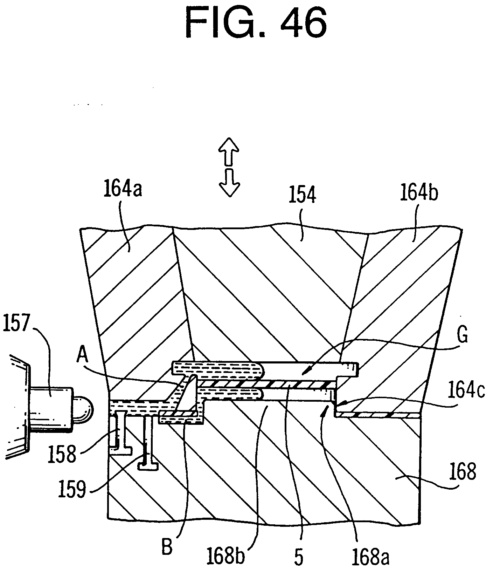

Fig. 46 shows a modified example of the injection molding apparatus shown in Fig. 44. This modified example is different from the apparatus in Fig. 44 in that the disk-shaped sheet element piece 5 is not produced beforehand to be prepared, but a disk-shaped sheet element piece is punched from one long film-shaped sheet raw material by means of the present injection molding apparatus. This makes it possible to eliminate time and labor to punch and prepare a large number of disk-shaped sheet element pieces one by one. The constitution and function of the present injection molding apparatus will be explained hereinafter. Since the same members as the constitution elements shown in Fig. 44 indicate the same members, explanation for which is omitted.

Under the condition in which the injection core 154 and the splittable molds 164a and 164b are separated from the cavity 168, one long film-shaped sheet raw material is inserted between the splittable molds 164a and 164b and the cavity 168. In the example shown in the figure, a state is shown in which the film-shaped sheet raw material is inserted from the front side with respect to the plane of Fig.46 toward the back side.

When the film-shaped sheet raw material has been sent to a predetermined position, the core 154 and the splittable molds 164a and 164b descend in a integrated manner to joint with the upper surface of the cavity 168. Thus, the projecting portion 168b at the upper surface of the cavity 168 enters into the splittable molds 164a and 164b, to thereby form the injection space G surrounded by the core 154, the splittable molds 164a and 164b and the cavity 168.

The lower end inner peripheral edges of the splittable molds 164a and 164b and the upper end outer peripheral edge 168a of the projecting portion of the cavity 168 are fitted with each other with little clearance in the above-mentioned clamping state. Therefore, when the splittable molds 164a and 164b and the cavity 168 are clamped, the shearing force acts on the film-shaped sheet raw material at the fitting position of the inner peripheral edge 164c of the splittable mold and the outer peripheral edge 168a of the cavity 168. Due to the shearing force, the disk-shaped sheet element piece 5 is automatically punched from the film-shaped sheet raw material, which is arranged in the injection space G. Namely, the lower end inner peripheral edge 164c of the splittable molds 164a and 164b and the outer peripheral edge 168a of the projecting portion of the cavity 168 constitute the punch portion for cutting the sheet raw material. In this case, the air suction passage 151 as shown in Fig. 44 is unnecessary.

The treatment operation conducted with respect to the sheet element piece after the preparation of the disk-shaped sheet element piece 5 is the same as that in the case of the example in Fig. 44.

According to the present example, the injection resin layers are laminated simultaneously on the both front and back surfaces of the sheet element piece, so that as compared with the conventional and general multilayered sheet production method such as the laminate method and the like, the preform having the layer structure of three or more layers can be produced at a low cost. The resin layer which is easy to extend may be arranged at the first resin layer 6a and the second resin layer 6b, thereby even when a material which is difficult to extend is contained in the sheet element piece 5, the sheet element piece 5 extends in accordance with the extension of the injection resin layers 6a and 6b laminated on the both surfaces thereof during the stage for shaping the preform 7 into the product container. As a result, such a problem of cracking due to defective extension of the sheet element piece 5 disappears.

### Example 9

Fig. 47 shows a preform which is produced in the ninth example of the production method of the multilayered thin wall container. A special object of this ninth example is to make it possible to produce a preform having a layer structure of three or more layers at a low cost, and to produce a multilayered multifunctional container having different functions such as the gas barrier property, flavor keeping property at a low cost.

The preform 7 shown in Fig. 47 is made by forming an injection resin layer 6 by injection molding between two disk-shaped sheet element pieces of a first sheet element piece 5a and a second sheet element piece 5b. The layer constitution of this preform is set, for example, as follows.

### Instance 1

First sheet element piece 5a: PET 20µm / AD(adhesive resin)
Injection resin layer 6: PP 1.5 mm
Second sheet element piece 5b: AD / PVDC 25µm / PP 40µm

### Instance 2

First sheet element piece 5a: PET 15µm / PET 20µm / AD
Injection resin layer 6: PP 1.2 mm
Second sheet element piece 5b: AD / EVOH 20µm / PP 50µm

### Instance 3

First sheet element piece 5a: PP 30µm / EVOH 15µm / AD
Injection resin layer 6: PP 1.0 mm
Second sheet element piece 5b: foamed PS 0.5 mm

The above-mentioned preform 7 is subjected to shaping processing such as vacuum forming or the like, which is shaped into a multilayered thin wall container having a shape as shown, for example, in Fig. 12. The injection resin layer 6 mainly gives the mechanical strength to the container. Depending on the specific functions possessed by the resins contained in the first sheet element piece 5a and the second sheet element piece 5b, specific functions are given to the finished container. For example, in the preform of the above-mentioned Instance 1, PET is contained in the first sheet element piece 5a and PVDC is contained in the second sheet element piece 5b, so that the flavor keeping property and the gas barrier property are given to the finished container.

The two sheet element pieces are prepared beforehand, and the injection resin layer is formed therebetween, so that the preform can be produced so as to have the resin layer having a thickness which is impossible to mold by the injection molding, that is a thickness not more than several tens µm on any one of the front and back surfaces or both the front and back surfaces of the injection resin layer. No laminating step is employed during the lamination of the resin layer, resulting in a reduction of cost.

The injection resin layer 6 may be mixed with scrap generated during the production of the sheet element piece or a resin in which defective ones generated in the sheet forming are recovered and the like. In this case, when the first sheet element piece 5a and the second sheet element piece 5b are non-transparent, the color of the injection resin layer comprising the recovered resin which has usually a color of the brown type cannot be seen, which is preferable from a viewpoint of appearance.

Conventionally, in order to laminate a plurality of resins which are difficult to be subjected to the single layer extrusion treatment, such as resins having melting points which are largely different from each other, such sheets are separately produced by the co-extrusion method, and they are laminated with an adhesive. On the contrary, in the above-mentioned preform, these resins can be separately laminated onto the both sides of the injection resin layer 6. Since the laminate method is not employed, it can be contemplated to omit steps and the preform can be produced at a low cost.

In a case where the second sheet element piece 5b is subjected to printing, steps of printing, label sticking and the like can also be omitted in the following steps.

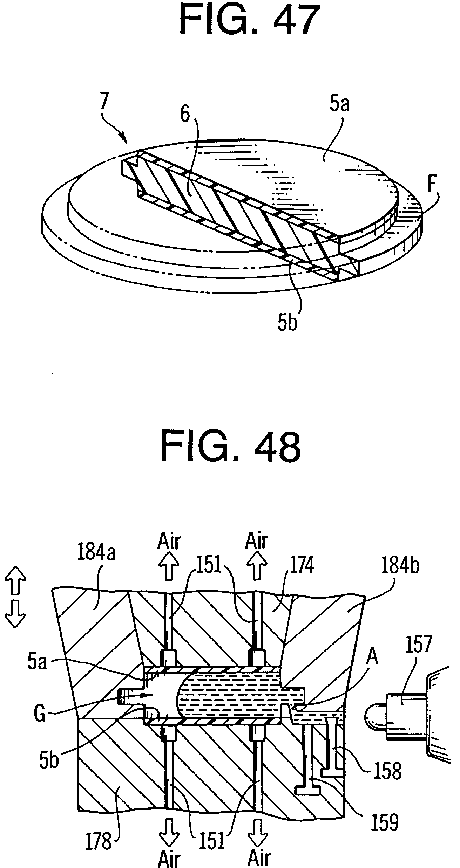

One example of the method for producing the preform shown in Fig. 47 and the product container shown in Fig. 12 will be explained hereinafter. Fig. 48 shows an injection molding apparatus for producing the preform 7. This apparatus is used in the container production apparatus shown in Fig. 1 instead of the injection molding apparatus shown in Fig. 8. In Fig. 48, an injection core 174 and splittable molds 184a and 184b are integrally provided in a manner capable of ascending and descending movement. At a lower position therefrom, an injection cavity 178 is provided. When the splittable molds 184a and 184b and the cavity 178 are jointed with each other, an injection space G is formed in the mold comprising the cavity 178, the splittable molds 184a and 184b and the core 174. At the inside of the cavity 178 and the core 174, air suction passages 151 are provided to fix so as not to move the sheet element pieces 5a and 5b.

At the lower end of the splittable mold 184b is formed a gate A communicating with the injection space G, and the resin sent from an injection molding nozzle 157 passes through the gate A and is injected into the inside of the injection space G. In Fig. 48, the reference numeral 158 indicates a lock pin, and the reference numeral 159 indicates an ejector pin.

The production method of the preform and the product container will be explained hereinafter.

At first, two disk-shaped sheet element pieces 5a and 5b are produced beforehand by a suitable method, for example, by punching from one sheet raw material. In Fig. 48, the core 174 and the splittable molds 184a and 184b are separated from the cavity 178 and lifted upwardly, and in that state, the first sheet element piece 5a is installed to the lower surface of the core 174 and absorbed and held by air flowing in the air suction passages 151, while the second sheet element piece 5b is installed to the upper surface of the cavity 178 and sucked and held by air in the same manner.

Thereafter, the core 174 and the splittable molds 184a and 184b are allowed to descend, and the splittable molds 184a and 184b and the cavity 178 are jointed with each other so as to form the injection space G. The resin is poured into the injection space G through the injection molding nozzle 157, to thereby form the preform 7 which has the sheet element pieces 5a and 5b on the both front and back surfaces of the injection resin layer 6. After a completion of the molding, the splittable molds 184a and 184b are separated from the cavity 178, and at this time, the runner existing at the gate A is disengaged. And then, the ejector pin 159 is operated to remove the runner at the gate portion.

The preform 7 produced by the injection molding is heated by the preform heating apparatus (Fig. 9), and then shaping processing is applied to the preform by the plug-assist forming apparatus (Fig. 1). The product container (Fig. 12) is produced by this shaping processing.

In the preform produced according to the present example, the two sheet element pieces 5a and 5b are simultaneously laminated on the both front and back surfaces of the injection resin layer 6, so that as compared with the conventional and general multilayered sheet production method such as the laminate method and the like, the preform having the layer structure of three or more layers can be produced at a low cost. Especially, when different functional resin layers are selected as resins for constituting the two sheet element pieces, the multilayered multifunctional container can be produced simply at a low cost.

### Example 10

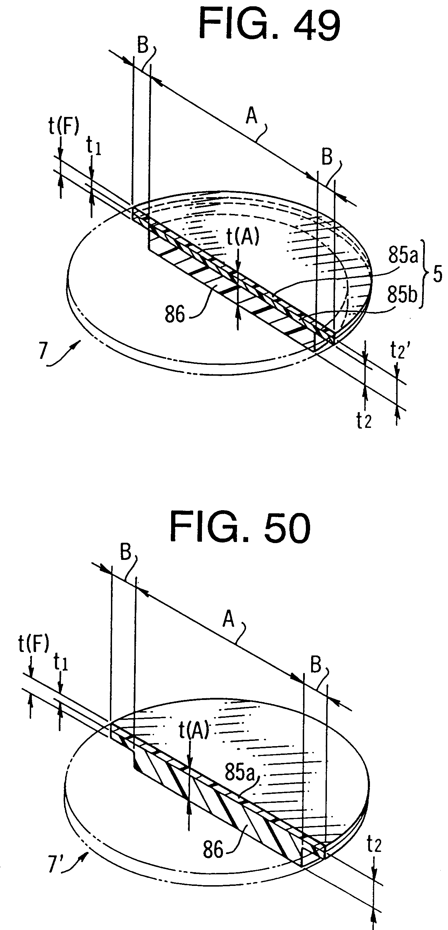

Fig. 49 shows a preform which is produced in the tenth example of the production method of the multilayered thin wall container. This preform is formed by laminating a polyester (PET) layer 85a, an intermediate resin layer 85b and a heat resistant resin layer 86. From a viewpoint of shape, the preform 7 is constituted by a central main body portion A constituted by the PET layer 85a, the intermediate resin layer 85b and the heat resistant resin layer 86, and a flange portion B locating at the outer edge thereof being constituted by the PET layer 85a and the intermediate resin layer 85b.

As the heat resistant resin layer 86 can be used resins having various specific functions such as a resin having the gas barrier property, a resin having the moisture resistant property and the like, a resin having the adhesive property and the like. This heat resistant resin layer 86 may be a multilayered constitution, if necessary.

A wall thickness t1 of the PET layer 85a of the preform 7 is set to be 0.6 mm or less. A wall thickness t(F) of the flange portion B is also set to be 0.6 mm or less. A thickness of the heat resistant resin portion is considered to be a thickness t2 of the heat resistant resin layer 86 in the case of using no heat resistance resin for the intermediate resin layer 85b, and is considered to be a thickness t2′ of a portion of the combination of the heat resistant resin layer 86 and the intermediate resin layer 85b in the case of using a heat resistant resin for the intermediate resin 85b. The wall thickness t2 or t2′ of the heat resistant resin layer portion occupies 70 % or more of the thickness t(A) of the main body portion A.

The above-mentioned preform 7 is subjected to shaping processing such as vacuum forming or the like to shape into a cup container for winding fastening as the product container having a shape as shown, for example, in Fig. 12. In this case, the flange portion B (Fig. 49) of the preform 7 exactly serves as the flange 2 for winding fastening. A metallic cap is wound and fastened to the flange 2 for winding fastening, and the interior of the product container is tightly sealed. As described above, unless the thickness of the flange 2 is a predetermined thin thickness, no sufficient tight sealing state can be obtained when the cap is wound and fastened.

The preform 7 in Fig. 49 can be produced, for example, by the following method. At first, a long film-shaped sheet raw material having two layers of the PET layer 85a and the intermediate resin layer 85b is produced by means of a sheet forming method such as the adhesive laminating method, the co-extrusion method or the like, and then the sheet raw material is subjected to punching processing to produce a disk-shaped sheet element piece 5. Of course, this sheet element piece 5 also has the two layer structure comprising the PET layer 85 and the intermediate resin layer 85b.

The produced sheet element piece 5 is then set to the inside of the injection space in the injection molding mold, and the injection molding is performed in that state. As a result, the heat resistant resin layer 86 as the injection molding resin layer is laminated on the side of the intermediate resin layer 85b of the sheet element piece 5 to thereby produce the preform 7. With respect to the preform 7 thus formed, the thickness of the PET layer 85a is formed to be thin as being 0.6 mm or less, so that the whole thickness of the preform also becomes thin, resulting in a reduction of cost.

In addition, the thickness of the heat resistant resin layer portion t2 or t2′ is set to be 70 % or more of the thickness t(A) of the main body portion A, so that a heat resistant temperature as the whole preform is maintained to be a heat resistant temperature of the heat resistant resin layer, namely a high degree. As a result, the container made from the preform can be sufficiently respond to a high temperature treatment such as the retort treatment and the like. In this case, it is preferable to select each resin so as to make the difference to be 20°C or less between a heat resistant temperature of the heat resistant resin layer 86 and a heat resistant temperature of the other resin layer which is the PET layer 85a in the case of the present example. Such selection makes it possible to certainly adjust the heat resistance of the whole preform to the heat resistance of the resin having the higher heat resistant temperature.

Further, in the preform 7 of the present example, the layer thickness t(F) of the flange portion B is 0.6 mm or less, so that the thickness of the flange portion B can be finished to be 0.6 mm or less without applying any secondary processing. Namely, it becomes possible to make the container suitable for the winding fastening treatment without applying any secondary processing.

Fig. 50 shows another example in relation to the preform. This preform 7′ is different from the preform 7 shown in Fig. 49 in that the preform 7′ is constituted by two layers of the PET layer 85a and the heat resistant resin layer 86. The fact that the wall thickness t1 of the PET layer 85a is 0.6 mm or less and the fact that the wall thickness t2 of the heat resistant resin layer 86 is 70 % or more of the wall thickness t(A) of the main body portion A are the same as the example in Fig. 49.

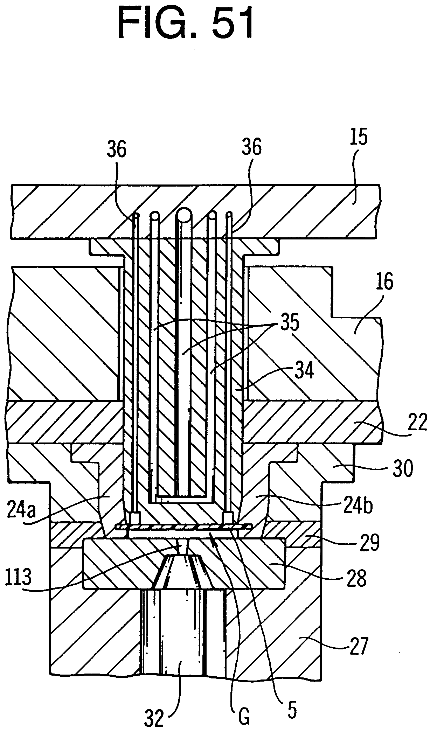

The production method of the preform 7 shown in Fig. 49 and the method for producing the product container from the preform 7 will be explained in detail hereinafter. Fig. 51 shows an injection molding apparatus for producing the preform, and this apparatus is used in the container production apparatus shown in Fig. 1 instead of the injection molding apparatus in Fig. 8.

In Fig. 51, both the injection core 34 and the splittable molds 24a and 24b for holding the preform are moved to the releasing position (not shown) being largely separated from the injection cavity 28. Thereby, the upper surface of the cavity 28 is largely released. Under this condition, the disk-shaped sheet element piece 5 is installed to the lower end surface of the core 34. As understood from Fig. 49, the sheet element piece 5 is a disk-shaped raw material of the two layer structure in which the PET layer 85a and the intermediate resin layer 85b are laminated, which is produced beforehand by punching a film-shaped sheet material produced by a well-known multilayered sheet production method such as co-extrusion and the like. The sheet element piece 5 is absorbed and fixed to the lower end of the core 34 by air flowing in the air suction passage 36. The installed sheet element piece 5 uses its upper surface that is the surface to contact with the core 34 as the inner peripheral surface of the product container 1 (Fig. 12).

When the sheet element piece 5 is installed to the lower end of the core 34, as shown in Fig. 51, the core 34 and the splittable molds 24a and 24b are set to the clamping position. Under this condition, a heat resistant resin is poured into the injection space G through the hot runner 32. Thus, the heat resistant resin layer 86 is laminated on the lower surface of the sheet element piece 5 to form the preform shown in Fig. 49.

When the above-mentioned injection molding step is completed, the core 34 moves from the clamping position to the releasing position directing to the upper direction in Fig. 51. The splittable molds 24a and 24b moves upwardly to a position slightly above the clamping position with holding the preform 7. And then, the preform 7 is transferred to the heating stage (Fig. 9) with being held by the splittable molds 24a and 24b. In this heating stage, owing to the heat emitted from the upper heater unit 50 and the lower heater unit 46, the preform 7 is heated to facilitate welding among each of the layers of the PET layer 85a, the intermediate resin layer 85b and the heat resistant resin layer 86. Pre-heating is also performed for the container shaping step which is the next step. The shaping processing applied to the preform 7 having been pre-heated is the same as the plug-assist forming treatment explained in relation to Fig. 11, so that its explanation is eliminated.

With respect to the product container produced after passing through the above-mentioned steps, since the PET layer 85a (Fig. 49) is present at all areas of the flange 2 (Fig. 12), the flavor keeping property is sufficiently obtained in the product container. According to the preform of the present example, the whole thickness of the preform can be made thin to allow a reduction in cost. Although the thickness has been made thin, sufficient heat resistance can be obtained. Further, the container which is preferable for the winding fastening treatment can be produced without applying any secondary processing.

### Example 11

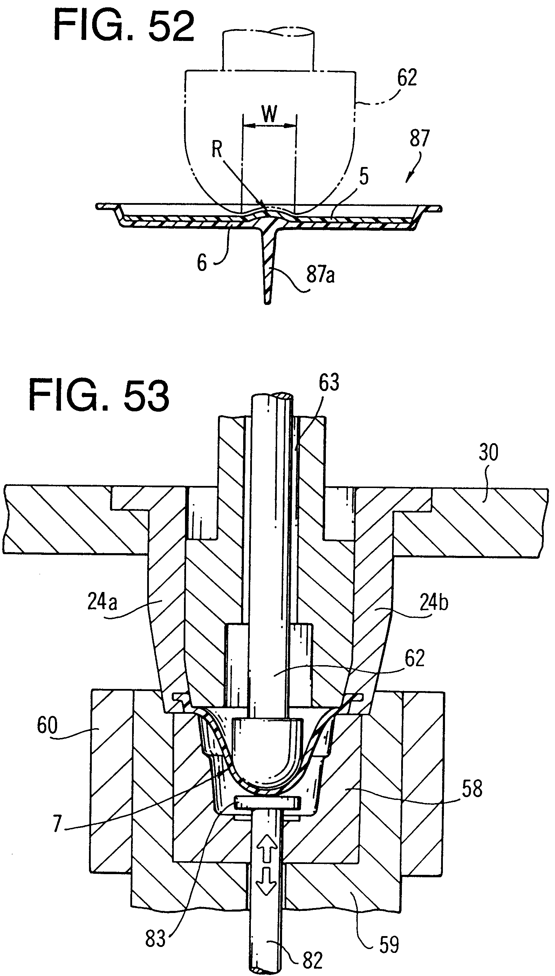

The eleventh example shown in Fig. 53 has an improvement given in the plug-assist forming apparatus shown in Fig. 11. Concretely, a through-hole is provided at the central portion of the container lower mold 58 and the central portion of the lower mold holder 59, and an elevating rod 82 is provided extending in the upper and lower directions through the through-hole. To the upper end of the elevating rod 82 is fixed a disk-shaped preform pinching member 83. The elevating rod 82 is driven by a driving apparatus not shown in the figure to perform a reciprocal straight movement in the upper and lower directions.

When the shaping processing is applied to the preform 7 by the shaping apparatus of the present example, before the plug 62 is lowered, the elevating rod 82 is lifted upwardly so as to pinch the preform 7 under pressure between the upper surface of the preform pinching member 83 and the lower end surface of the plug 62. And then, with maintaining the pinching state, the plug 62 and the elevating rod 82 are lowered at an equal speed, simultaneously with which air is blown through the air introducing hole 63 to perform the stretching blow forming. A product container having a desired shape can be obtained by the stretching blow forming.

In an apparatus shown in Fig.11, in which the elevating rod 82 and the preform pinching member 83 are not used, when a product container is produced by extending the preform 7, the gate center of the preform 7 deviates from the center position of the finished product container, and thereby the appearance of the product container is occasionally deteriorated considerably. The deviation between the gate center and the container center also makes the wall thickness of the bottom portion of the product container to be partially thin, sometimes resulting in a fear of deterioration of the strength of the product container.

On the contrary, according to the present example in which the stretching blow forming is performed with pinching the gate portion of the preform 7 under pressure by means of the preform pinching member 83 and the plug 62, the gate portion of the preform 7 never deviates to the lateral direction during the blow forming, and as a result, no positional deviation of the gate portion takes place in the finished product container, and hence the excellent appearance is exactly obtained in the container. The wall thickness of the whole bottom portion of the product container becomes uniform and never becomes partially thin, so that the strength of the product container is enhanced.

### Example 12

Fig. 52 shows a preform which is produced in the twelfth example of the production method of the multilayered thin wall container. This preform 87 has a modification in the preform 7 shown in Fig. 15. The feature of the present preform 7 is that a wall thickness of a portion R corresponding to the gate portion 87a formed by injection molding is made locally thick. In the plug-assist forming treatment shown in Fig. 11, generally speaking, when the preform 7 is extended into the product container, the central portion corresponding to the gate portion is apt to extend with an extension ratio which is larger than those of other portions. Thus, unless no countermeasure is given, the wall thickness of the central portion is apt to be thinner than other portions. Occasionally, there is a fear of occurrence of cracking at the thin portion.

On the contrary, by making thick the wall thickness of the central portion R corresponding to the gate portion 87a in the preform 87 as in the present example, there may be no such event that the wall thickness of the portion corresponding to the gate portion in the product container becomes thin, or cracking takes place at the portion after the completion of the product container after the plug-assist forming is completed. According to experiments by the inventor, it is found that a range W for providing the thick wall portion R should be relatively wider than the size of the gate portion 87a beforehand. In other words, it is preferable that the uplifting manner of the thick wall portion R has a relatively gentle slope. This is due to the fact that if this range W is too narrow, and the uplifting manner of the thick wall portion R is sharp, then the root portion of the thick wall portion R extends excessively, and there is a fear that the strength becomes rather weak.

The thick wall portion R of the preform as shown in Fig. 52 can be formed, for example, by forming a concave portion corresponding to the shape of the thick wall portion R at the central portion of the bottom surface of the injection core 34 in the injection molding apparatus shown in Fig. 8.

With reference to the plug-assist forming apparatus for forming the preform 7, it is convenient to form a concave portion having a shape corresponding to the convex shape of the thick wall portion R at the center of the bottom portion of the plug 62 as shown by broken lines beforehand. This makes it possible to prevent deviation of the central position of the preform 87.

## Claims

1. A method for producing a multilayered thin wall container (1,3) formed with resin materials having a plurality of resin layers comprising,
a sheet installing step for arranging a sheet element piece(5) containing a resin layer having a specific function at an injection space(G) in a mold(24a,24b,34,28),
an injection molding step(A) for injecting a resin into said injection space(G) in which said sheet element piece(5) is arranged so as to form a preform(7) in such a manner that an injection resin layer(6) is laminated on the sheet element piece(5), and
a container shaping step(C) for applying shaping processing to said formed preform(7) so as to form a product container(1,3).

2. The method for producing a multilayered thin wall container(1,3) as claimed in claim 1, further comprising a preform heating step(B) for heating said formed preform(7) being provided between said injection molding step(A) and said container shaping step(C).

3. The method for producing a multilayered thin wall container(1,3) as claimed in claim 1, wherein said sheet element piece(5) is absorbed to said mold(34) by air suction in said sheet installing step.

4. The method for producing a multilayered thin wall container(1,3) as claimed in claim 1, wherein
in said injection molding step(A), said injection resin layer(6) is molded to be wider than said sheet element piece(5) so as to allow the outer edge of said injection resin layer(6) to be at the outside of the outer edge of the sheet element piece(5), and
in said container shaping step(C), said shaping processing is applied to said preform(7) with fixing and supporting an outer edge portion(C) of said injection resin layer(6) projecting to the outside portion of said sheet element piece(5) of the preform(7).

5. The method for producing a multilayered thin wall container(1,3) as claimed in claim 1, wherein
in said injection molding step(A), said injection resin layer(6) is molded to be smaller than said sheet element piece(5) so as to allow the outer edge of said sheet element piece(5) to be at the outside of the outer edge of said injection resin layer(6), and
in said container shaping step(C), said shaping processing is applied to said preform(7) with fixing and supporting an outer edge portion(C) of said sheet element piece(5) projecting to the outside portion of said injection resin layer(6) of the preform(7).

6. The method for producing a multilayered thin wall container(1,3) as claimed in claim 1, wherein
in said sheet installing step, said sheet element piece (5) having been produced into a desired shape beforehand is installed to said mold.

7. The method for producing a multilayered thin wall container(1,3) as claimed in claim 1, wherein
in said sheet installing step, a film-shaped sheet raw material(100) containing the resin layer having the specific function being inserted between a pair of opposing molds(103,104,121,122), the both molds being brought into contact with each other to perform clamping, one sheet element piece(5) being punched from said film-shaped sheet raw material(100) by means of said both molds during the clamping, and the sheet element piece(5) being placed at the inside of said injection space(G) formed between said both molds.

8. The method for producing a multilayered thin wall container(1,3) as claimed in claim 1 having a sheet installing apparatus for carrying out said sheet installing step, said sheet installing apparatus comprising,
a pair of molds(121,122) which are arranged opposing with each other so as to exist at least two positions of a clamping position and a releasing position,
an inside punch portion(140) which is provided at one(122) of said molds,
an outside punch portion(139) which is provided at the other mold(121) and fits to the outside of said inside punch portion at said clamping position, and
an auxiliary mold(129) which is provided around said mold(122) provided with the inside punch portion(140) and is elastically urged toward said mold(121) provided with said outside punch portion(139), wherein
when at least one of said molds(121,122) moves toward the clamping position, the sheet raw material(100) is pinched by said mold(121) provided with said outside punch portion(139) and said auxiliary mold(129), and said outside punch portion(139) and said inside punch portion(140) are fitted to each other with maintaining the pinching state, thereby said sheet element piece(5) is punched from said sheet raw material(100).

9. The method for producing a multilayered thin wall container(1,3) as claimed in claim 1 having a container shaping apparatus for carrying out the container shaping step(C), said container shaping apparatus comprises,
a plug(62) for pressurizing said preform(7) to the direction towards a cavity(58), and
an elevating member(82) provided at the bottom portion of the cavity(58), wherein
said shaping of the container is performed in a manner of pinching said preform(7) by means of said plug(62) and said elevating member(82).

10. The method for producing a multilayered thin wall container(1,3) as claimed in claim 8, wherein
said auxiliary mold(129) is provided with a taper-shaped guide surface(T2), and when at least one of said molds(121,122) moves to said clamping position, said mold is guided by said taper-shaped guide surface(T2) so as to coincide the center of said outside punch portion(139) with the center of said inside punch portion(140).

11. The method for producing a multilayered thin wall container(1,3) as claimed in claim 8 comprising,
a pinching member(143) having a high friction coefficient and elasticity being provided at least any one of a surface of said auxiliary mold(129) which is brought into contact with said sheet raw material(100) and a surface of a mold(121) for pinching said sheet raw material cooperating with said auxiliary mold(129) which is brought into contact with said sheet raw material(100).

12. The method for producing a multilayered thin wall container(1,3) as claimed in claim 1 further comprising a container cutting step for cutting the product container(1,3) from the peripheral edge supporting portion(C) of the preform(7), wherein
in said container shaping step(C), the shaping processing is applied to said preform(7) in a manner of supporting the peripheral edge supporting portion(C) of said preform(7), and said product container(1,3) is shaped integrally with said peripheral edge supporting portion(C), the product container(1.3) being shaped to have a flute portion(E) for forming a flange(2,4), and
in said container cutting step, said product container(1,3) is cut from said peripheral edge supporting portion(C) using the flute portion(E) for forming the flange(2,4) as the boundary.

13. The method for producing a multilayered thin wall container(1,3) as claimed in claim 12 further comprising,
a flute portion pressuring step for pressurizing said flute portion(E) formed by said container shaping step so as to make the thickness thereof thin being provided between said container shaping step and said container cutting step.

14. A multilayered thin wall container(1.3) formed with resin materials having a plurality of resin layers, wherein
said container(1,3) is formed by applying shaping processing to a sheet of preform(7) having a plurality of resin layers(5,6), and
said preform(7) is formed by laminating injection resin layers(6) on the surfaces of a sheet element piece(5) containing a resin layer having a specific function by means of injection molding.

15. The multilayered thin wall container(73) as claimed in claim 14 to which a heat seal cap(74) is heat-welded, wherein
during said injection molding with respect to said sheet element piece(5), said injection resin layer(6) is molded to be wider than the sheet element piece(5) so as to allow the outer edge of said injection resin layer(6) to be at the outside of the outer edge of said sheet element piece(5),
during said shaping processing for producing said container (73), said shaping processing is applied to said preform(7) with fixing and supporting an outer edge portion of said injection resin layer(6) projecting to the outside of said sheet element piece(5) of said preform(7), and
the outer edge portion of said injection resin layer(6) is used as a flange(72) for heat-welding the heat seal cap(74).

16. A multilayered thin wall container(1) equipped with a flange(2) at the upper end of a container wall(8), wherein
said container wall(8) and said flange(2) are formed integrally with each other by applying shaping processing to a preform(7) in a manner of being fixed and supported at a peripheral edge supporting portion(C),
said preform(7) is formed by laminating an injection resin layer(6) on the surface of a sheet element piece(5) containing a resin layer having a specific function by means of injection molding,
said formed preform(7) has a flute portion(E) for forming the flange(2) at a place other than the peripheral edge supporting portion(C) thereof, and
said flange(2) is formed by cutting said flute portion(E) for forming the flange(2).

17. The method for producing a multilayered thin wall container as claimed in claim 1, wherein
said preform(7) produced in said injection molding step has a main body(A) portion and a flange portion(B) formed at its outer edge,
said preform(7) being shaped into said multilayered thin wall container(1,3) by applying the shaping processing to said main body portion (A) with fixing and supporting said flange portion(B),
a polyester layer having a thickness of 0.6.mm or less is formed on the entire surface at the side corresponding to the inner surface side of said multilayered thin wall container(1,3), and
said main body portion(A) has a heat resistant resin layer whose thickness is 70 % or more with respect to the thickness of said main body portion(A).

18. The method for producing a multilayered thin wall container as claimed in claim 17, wherein
said heat resistant resin layer has a heat resistant temperature which is higher than a heat resistant temperature of other resin layers, and the difference between said both heat resistant temperatures is within 20 °C.

19. The method for producing a multilayered thin wall container as claimed in claim 1, wherein
in said injection molding step(A), the preform(7) having the following shape is formed such that
a wall thickness of said injection resin layer(6) of a portion extending larger than other portions during the formation into the multilayered thin wall container(1,3) is made thick so as to project to the reverse side of said sheet element piece(5).

20. The method for producing a multilayered thin wall container as claimed in claim 1, wherein
in said sheet installing step, two sheet element pieces(5a,5b) are arranged at the inside of said mold(184a,184b,174,178), and
in said injection molding step(A), a resin is injected between the two sheet element pieces(5a,5b) to produce said preform(7).

21. The method for producing a multilayered thin wall container(1,3) as claimed in claim 1, wherein
in said injection molding step(A), injection resin layers(6a,6b) are laminated on both front and back surfaces of said sheet element piece(5).

22. The method for producing a multilayered thin wall container(1,3) as claimed in claim 1, wherein
in said injection molding step(A), a wall thickness of said preform(7) at a portion(R) corresponding to a gate portion(87a) through which the injection resin(6) is introduced is made thick.
